(19)

Europäisches
Patentamt
European
Patent Office
Office européen
des brevets

(11) **EP 3 518 524 A1**

(12) **EUROPEAN PATENT APPLICATION**
published in accordance with Art. 153(4) EPC

(43) Date of publication:
**31.07.2019 Bulletin 2019/31**

(21) Application number: **17852847.7**

(22) Date of filing: **08.09.2017**

(51) Int Cl.:
**H04N 5/232** *(2006.01)*  **G06T 1/00** *(2006.01)*
**G06T 5/50** *(2006.01)*  **G08G 1/16** *(2006.01)*
**H04N 5/235** *(2006.01)*

(86) International application number:
**PCT/JP2017/032393**

(87) International publication number:
**WO 2018/056070 (29.03.2018 Gazette 2018/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **23.09.2016 JP 2016185872
05.12.2016 JP 2016236016**

(71) Applicant: **Sony Semiconductor Solutions
Corporation
Atsugi-shi, Kanagawa 243-0014 (JP)**

(72) Inventors:
• **KOIZUMI Makoto
Atsugi-shi
Kanagawa 243-0014 (JP)**

• **FUJIMOTO, Masakatsu
Atsugi-shi
Kanagawa 243-0014 (JP)**
• **OKAMOTO, Ikko
Atsugi-shi
Kanagawa 243-0014 (JP)**
• **YAMAZAKI, Daiki
Atsugi-shi
Kanagawa 243-0014 (JP)**

(74) Representative: **MFG Patentanwälte
Meyer-Wildhagen Meggle-Freund
Gerhard PartG mbB
Amalienstraße 62
80799 München (DE)**

(54) **SIGNAL PROCESSING DEVICE, IMAGE-CAPTURING DEVICE, AND SIGNAL PROCESSING METHOD**

(57)    The present technology relates to a signal processing device, an imaging device, and a signal processing methodwhich are capable of recognizing a blinking target object reliably and recognizing an obstacle accurately, in a situation in which a luminance difference is very large.

Signals of a plurality of images captured at different exposure times are added using different saturation signal amounts, and signals of a plurality of images obtained as a result of the addition are synthesized, and thus it is possible to recognize a blinking target object reliably and recognize an obstacle accurately, in a situation in which a luminance difference is very large. The present technology can be applied to, for example, a camera unit or the like that captures an image.

**EP 3 518 524 A1**

## FIG. 13

```
                    101              102              103                      104              105
                     │                │                │                        │                │
          ┌──────────┐      ┌──────────┐      ┌──────────┐  IMAGE 1   ┌──────────┐      ┌──────────┐
          │          │      │          │      │          │──────────→│          │      │          │
          │          │      │ IMAGING  │      │  DELAY   │  IMAGE 2   │  SIGNAL  │      │  OUTPUT  │        VIDEO
          │   LENS   │─────→│ ELEMENT  │─────→│  LINE    │──────────→│PROCESSING│─────→│   UNIT   │───────→ DATA
          │          │      │          │      │          │   ...      │   UNIT   │      │          │
          │          │      │          │      │          │  IMAGE N   │          │      │          │
          └──────────┘      └──────────┘      └──────────┘──────────→└──────────┘      └──────────┘
                                 ↑                                         │
                                 │              ┌──────────┐               │
                                 │              │  TIMING  │               │
                                 └──────────────│ CONTROL  │←──────────────┘
                                                │   UNIT   │
                                                └──────────┘
                                                     │
                                                    106

                                                                                          CAMERA UNIT
                                                                                               │
                                                                                              10
```

# EP 3 518 524 A1

**Description**

TECHNICAL FIELD

The present technology relates to a signal processing device, an imaging device, and a signal processing method, and more particularly, to a signal processing device, an imaging device, and a signal processing method which are capable of recognizing a blinking target object reliably and recognizing an obstacle accurately, for example, in a situation in which a luminance difference is very large.

BACKGROUND ART

In recent years, in-vehicle cameras have been increasingly installed in automobiles in order to realize advanced driving control such as automatic driving.

However, in in-vehicle cameras, in order to secure safety, it is required to ensure visibility even under a condition in which a luminance difference is very large such as an exit of a tunnel, and a technique for realizing a wide dynamic range while suppressing over exposure of an image is necessary. As a countermeasure against such over exposure, for example, a technique disclosed in Patent Document 1 is known.

Further, in recent years, incandescent light bulbs or the like used for traffic signals and light source of electronic road signs have been replaced for light emitting diodes (LEDs).

The LEDs have a higher blinking response speed than the incandescent light bulbs, and for example, if a traffic signal or a road sign of an LED is photographed with an in-vehicle camera or the like installed in an automobile or the like, flicker occurs, and they are photographed in a state in which the traffic signal and the road sign are turned off. As a countermeasure against such flicker, for example, a technique disclosed in Patent Document 2 is known.

Further, a technique for recognizing an obstacle such as a preceding vehicle located in a traveling direction of an automobile or a pedestrian crossing a road is essential in realizing automatic driving. As a technique for recognizing an obstacle, for example, a technique disclosed in Patent Document 3 is known.

CITATION LIST

PATENT DOCUMENT

Patent Document 1: Japanese Patent Application Laid-Open No. 5-64075
Patent Document 2: Japanese Patent Application Laid-Open No. 2007-161189
Patent Document 3: Japanese Patent Application Laid-Open No. 2005-267030

SUMMARY OF THE INVENTION

PROBLEMS TO BE SOLVED BY THE INVENTION

By the way, a technique for recognizing a traffic signal, a road sign, and the like of an LED with a high blinking response speed reliably in a situation in which a luminance difference is very large such as an exit of a tunnel and recognizing an obstacle such as a preceding vehicle or a pedestrian accurately is not established, and such a technique is required.

The present technology was made in light of the foregoing and makes it possible to recognize a blinking target object reliably in a situation in which a luminance difference is very large and recognize an obstacle accurately.

SOLUTIONS TO PROBLEMS

A signal processing device according to an aspect of the present technology includes: an adding unit that adds signals of a plurality of images captured at different exposure times using different saturation signal amounts; and a synthesizing unit that synthesizes signals of a plurality of images obtained as a result of the addition.

An imaging device according to an aspect of the present technology includes: an image generating unit that generates a plurality of images captured at different exposure times; an adding unit that adds signals of the plurality of images using different saturation signal amounts; and a synthesizing unit that synthesizes signals of a plurality of images obtained as a result of the addition.

A signal processing method according to an aspect of the present technology includes the steps of: adding signals of a plurality of images captured at different exposure times using different saturation signal amounts and synthesizing signals of a plurality of images obtained as a result of the addition.

In the signal processing device, the imaging device, and the signal processing method of one aspect of the present technology, signals of a plurality of images captured at different exposure times are added using different saturation signal amounts, and signals of a plurality of images obtained as a result of the addition are synthesized.

The signal processing device or the imaging device may be an independent device or may be an internal block constituting a single device.

EFFECTS OF THE INVENTION

According to one aspect of the present technology, it is possible to recognize a blinking target object reliably in a situation in which a luminance difference is very large and recognize an obstacle accurately.

Further, the effect described herein is not necessarily limited, and any effect described in the present disclosure may be included.

BRIEF DESCRIPTION OF DRAWINGS

Fig. 1 is a diagram for describing an example of photographing of a photographing target in which a luminance difference is very large.
Fig. 2 is a diagram for describing an example of photographing of a blinking photographing target.
Fig. 3 is a diagram for describing an example of recognizing a front view of a vehicle.
Fig. 4 is a diagram for describing a method of coping with a photographing target in which a luminance difference is very large.
Fig. 5 is a diagram illustrating an example of a case where an OFF state is recorded although an ON state of a traffic signal has to be recorded.
Fig. 6 is a diagram illustrating an example of photographing with an exposure time exceeding an OFF period of a blinking light source.
Fig. 7 is a diagram for describing a technique of current technology.
Fig. 8 is a diagram for describing a technique of current technology.
Fig. 9 is a diagram for describing an obstacle detection technique using a peak position of a histogram.
Fig. 10 is a diagram illustrating an example of a spike of a histogram.
Fig. 11 is a diagram illustrating an example of a synthesis result of current technology.
Fig. 12 is a diagram illustrating an example of a pseudo spike occurring in a histogram in synthesis using current technology.
Fig. 13 is a block diagram illustrating a configuration example of an embodiment of a camera unit serving as an imaging device to which the present technology is applied.
Fig. 14 is a diagram illustrating an example of shutter control by a timing control unit.
Fig. 15 is a diagram illustrating an example of shutter control by a timing control unit.
Fig. 16 is a diagram illustrating a configuration example of a signal processing unit.
Fig. 17 is a flowchart for describing signal processing in a case where dual synthesis is performed.
Fig. 18 is a diagram illustrating an example of a processing result of signal processing.
Fig. 19 is a diagram illustrating an example of an actual captured image.
Fig. 20 is a diagram illustrating an example of an actual captured image.
Fig. 21 is a diagram illustrating a configuration example of a signal processing unit in a case where triple synthesis is performed.
Fig. 22 is a flowchart for describing signal processing in a case where triple synthesis is performed.
Fig. 23 is a flowchart for describing signal processing in a case where triple synthesis is performed.
Fig. 24 is a diagram for describing a first addition process and a first linearization process in detail.
Fig. 25 is a diagram for describing a second addition process and a second linearization process in detail.
Fig. 26 is a diagram for describing suppression of a spike of a histogram according to the present technology in detail.
Fig. 27 is a diagram for describing a synthesis coefficient used in the present technology in detail.
Fig. 28 is a diagram for describing N-times synthesis.
Fig. 29 is a diagram illustrating a configuration example of a stacked solid state imaging device.
Fig. 30 is a diagram illustrating a detailed configuration example of a pixel region and a signal processing circuit region.
Fig. 31 is a diagram illustrating another configuration example of a stacked solid state imaging device.
Fig. 32 is a diagram illustrating a detailed configuration example of a pixel region, a signal processing circuit region, and a memory region.
Fig. 33 is a diagram illustrating a configuration example of a computer.
Fig. 34 is a block diagram illustrating an example of a schematic configuration of a vehicle control system.
Fig. 35 is an explanatory diagram illustrating an example of installation positions of an outside-vehicle information detecting section and an imaging section.

MODE FOR CARRYING OUT THE INVENTION

Hereinafter, an embodiment of the present technology will be described with reference to the appended drawings. Further, the description will proceed in the following order.
1. Overview of present technology
2. Embodiment of present technology
3. Modified example of embodiment of present technology
4. Detailed content of signal processing of present technology
5. Calculation formula of N-times synthesis
6. Configuration example of solid state imaging device
7. Configuration example of computer
8. Application example

<1. Overview of present technology>

(Example of photographing of photographing target in which a luminance difference is very large)

In recent years, in-vehicle cameras have been increasingly installed in automobiles in order to realize advanced driving control such as automatic driving. However, in in-vehicle cameras, in order to secure safety, it is required to ensure visibility even under very large luminance difference conditions such as in exits of tunnels, and a technique for realizing a wide dynamic range while suppressing over exposure of an image is necessary.

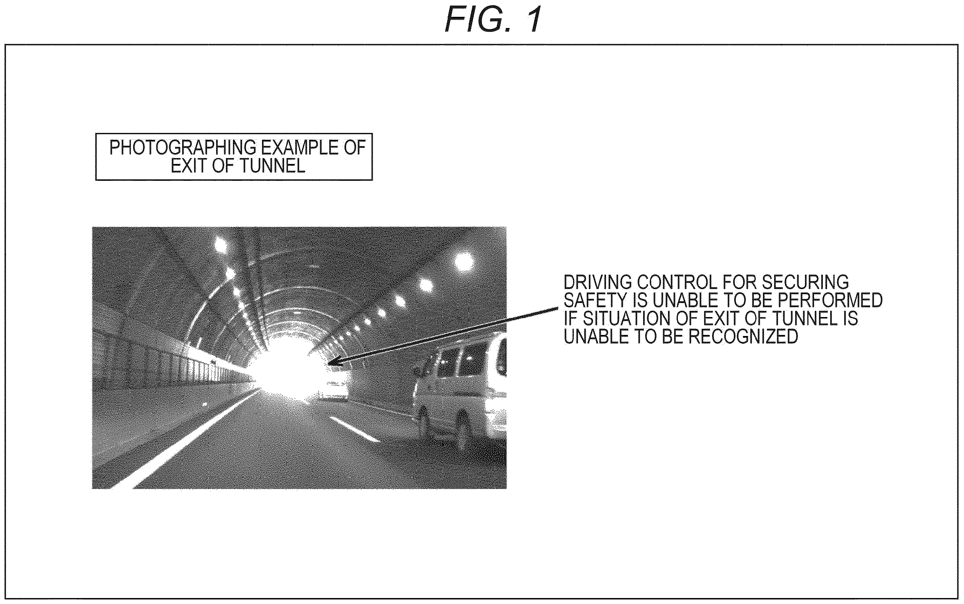

Fig. 1 is a diagram for describing an example of photographing of a photographing target in which a luminance difference is very large. In Fig. 1, an example of photographing at the exit of the tunnel is illustrated, but driving control for ensuring safety is unable to be performed if a situation of an exit of a tunnel is unable to be recognized.

(Example of photographing of blinking photographing target)

Further, in recent years, light bulbs serving as light source of traffic signals and signs have been replaced with LEDs. However, since LEDs have a higher blinking response speed than traditional light bulbs, if a traffic signal or sign of an LED is photographed by an imaging device, there is a problem in that flicker occurs, and it looks turned off, and it is a big issue for collateral of admissibility of evidence of a drive recorder and automatic driving of automobiles.

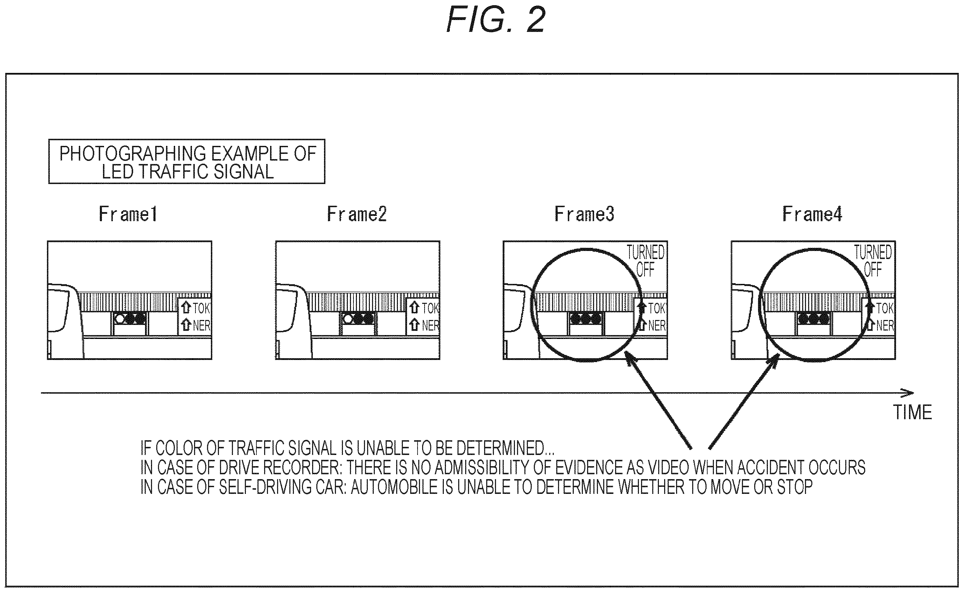

Fig. 2 is a diagram for describing an example of photographing of a blinking photographing target. In Fig. 2, a traffic signal in which blue (leftmost) is turned on is shown in images of a first frame (Frame 1) and a second frame (Frame 2), but a traffic signal in an OFF state is shown in images of a third frame (Frame 3) and a fourth frame (Frame 4).
When the traffic signal in the OFF state is shown as described above, for example, in a case where it is used in a drive recorder, it becomes a cause of obstructing admissibility of evidence of a video (image) . Further, when the traffic signal in the OFF state is shown, for example, in a case where the image is used for automatic driving of an automobile, it becomes a cause of obstructing driving control such as stopping of an automobile.

(Example of recognizing front view of vehicle)

Further, a technique for recognizing an obstacle such as a preceding vehicle located in a traveling direction of an automobile or a pedestrian crossing a road is essential in realizing automatic driving. For example, if detection of an obstacle in front of an automobile is delayed, an operation of an automatic brake is likely to be delayed.

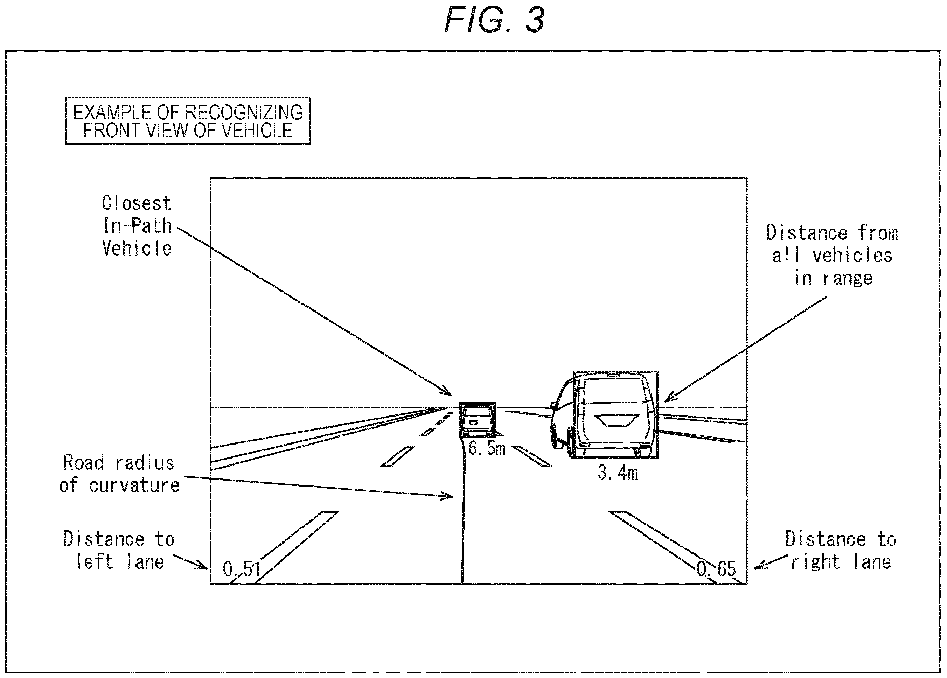

Fig. 3 is a diagram for describing an example of recognizing a front view of a vehicle. In Fig. 3, two vehicles traveling in front of an automobile, a state of a road surface, and the like are recognized, and automatic driving control is performed in accordance with a recognition result.

(Method of coping with blinking photographing target in situation in which luminance difference is very large)

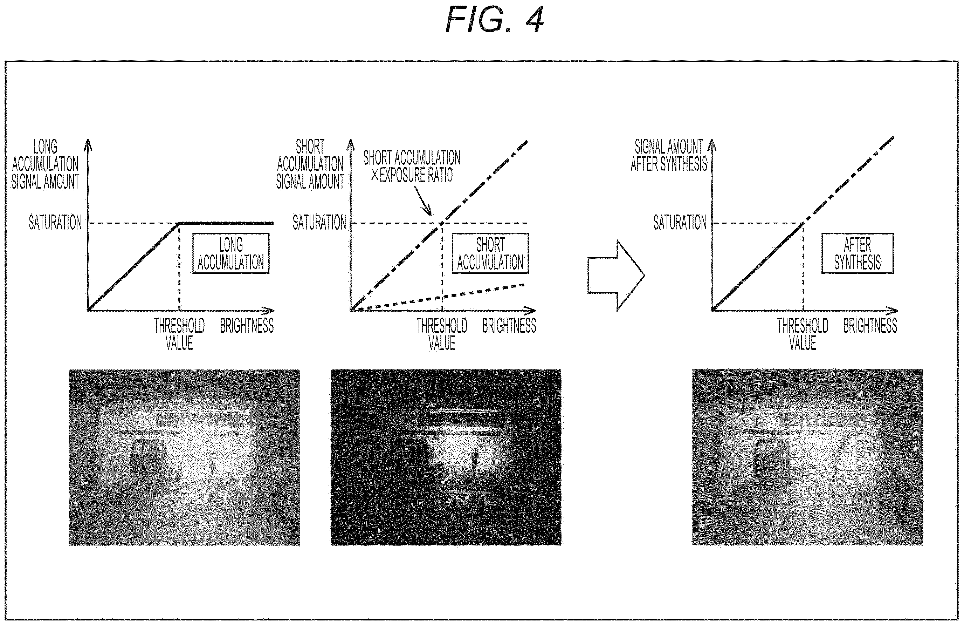

A technique for suppressing over exposure and increasing an apparent dynamic range by synthesizing images captured with a plurality of different exposure amounts has been proposed in Patent Document 1. In this technique, it is possible to generate an image with a wide dynamic range by outputting a long period exposure image (long-accumulated image) if brightness is lower than a predetermined threshold value with reference to a luminance value of a long period exposure image (long-accumulated image) having a long exposure time and outputting a short period exposure image (short-accumulated image) if the brightness is higher than a predetermined threshold value as illustrated in Fig. 4.

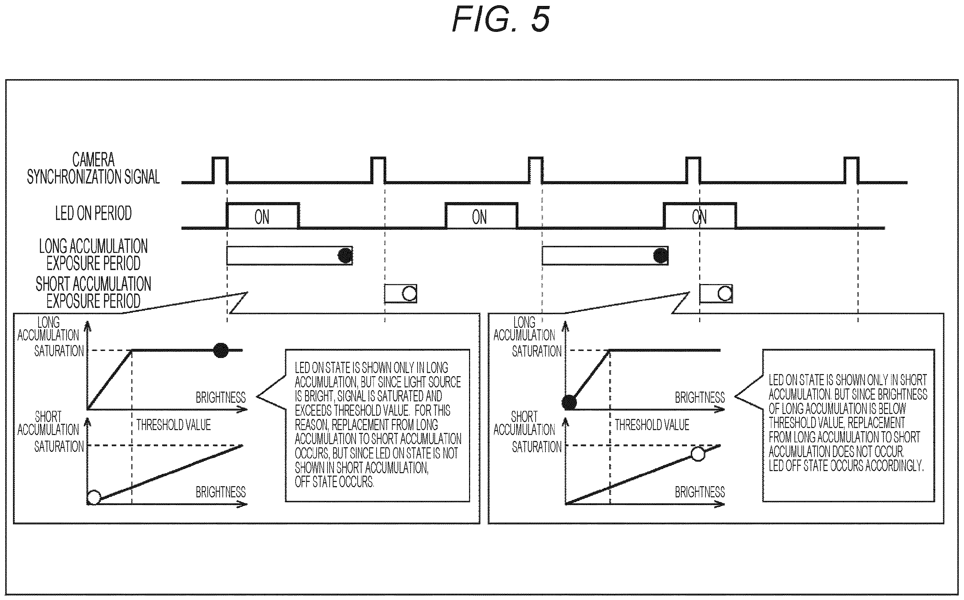

On the other hand, as illustrated in Fig. 2, in a case where a high luminance subject such as LED traffic signal blinks, if the long period exposure image (long-accumulated image) and the short period exposure image (short-accumulated image) are synthesized, the OFF state may be recorded although the ON state of the traffic signal has to be originally recorded. Fig. 5 illustrates an example of a case where the OFF state is recorded although the ON state of the traffic signal has to be recorded.

In the example illustrated in Fig. 5, in a case where the LED ON state is shown only in the long-accumulated image, since the light source is bright, the signal is saturated and exceeds the threshold value. For this reason, replacement from long-accumulated image to the short-accumulated image occurs, but since the LED ON state is not shown in the short-accumulated image, the OFF state occurs. Further, in the example of Fig. 5, in a case where the LED ON state is shown only in the short-accumulated image, since the brightness of the long-accumulated image is lower than the threshold value, replacement from the long-accumulated image to the short-accumulated image does not occur. As a result, since the ON state of the LED is not shown in the long-accumulated image, the OFF state occurs.

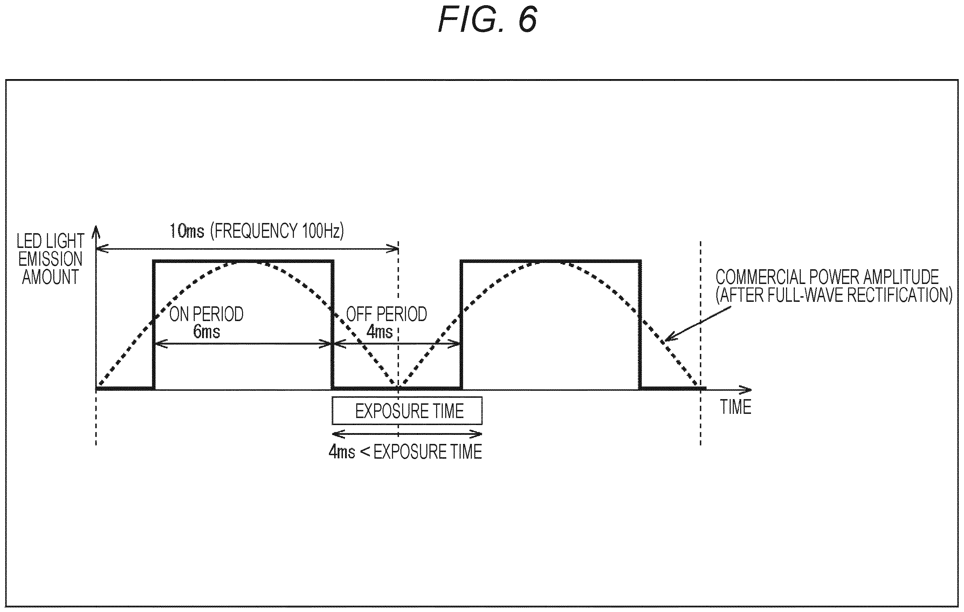

Further, for the flicker of the LED illustrated in Fig. 2, there is a technique for preventing imaging miss of a light emission period by performing imaging with an exposure time exceeding an OFF period of a blinking light source. For example, if a blinking frequency of a light source is 100 Hz, and a light emission duty ratio is 60%, it is possible to continuously photograph the ON state of the light source by setting an OFF period of 4 ms as a lower limit value of the exposure time and constantly securing the exposure time of the lower limit value or more (See Patent Document 2). Fig. 6 illustrates an example of photographing with an exposure time exceeding the OFF period of the blinking light source. In the example of Fig. 6, when the OFF period is 4 ms, the exposure time is larger than 4 ms.

However, in the case of a system in which a lens F value has to be used fixedly such as an in-vehicle camera, since the exposure time is unable to be made shorter than the OFF period of the light source in a high-illumination situation such as the outside in the fine weather, exposure is excessively performed, and visibility of a subject decreases. For this reason, in a situation with a large luminance difference in which the over exposure of the image illustrated in Fig. 1 occurs, an effect of increasing the dynamic range of the image is unable to be obtained.

(Technique of current technology)

As a technique for simultaneously solving the over exposure of the image illustrated in Fig. 1 and the flicker of the LED illustrated in Fig. 2, there is a technique of generating a signal with an increased dynamic range using addition signals of a plurality of captured images captured with different exposure times (hereinafter referred to as a technique of current technology).

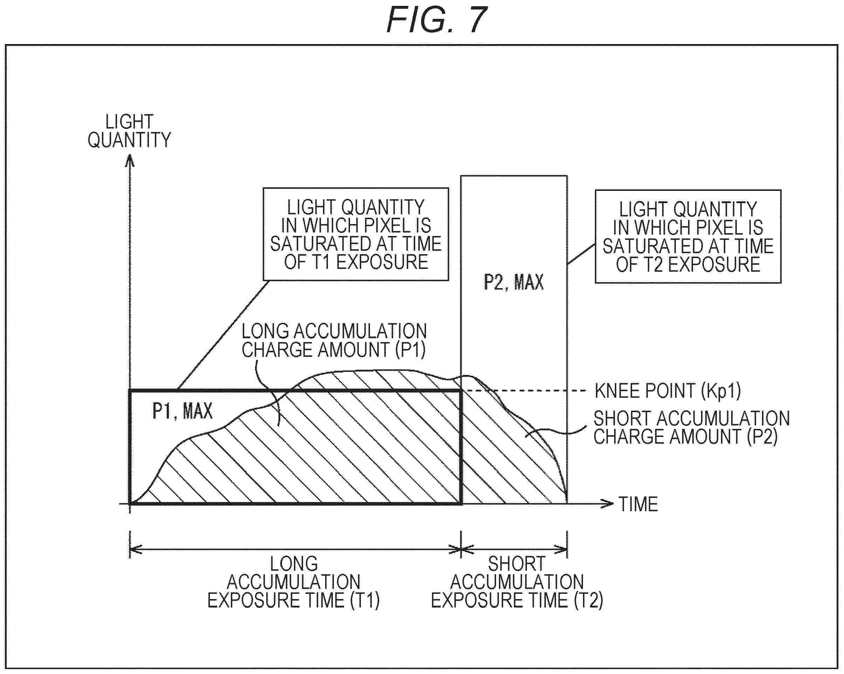

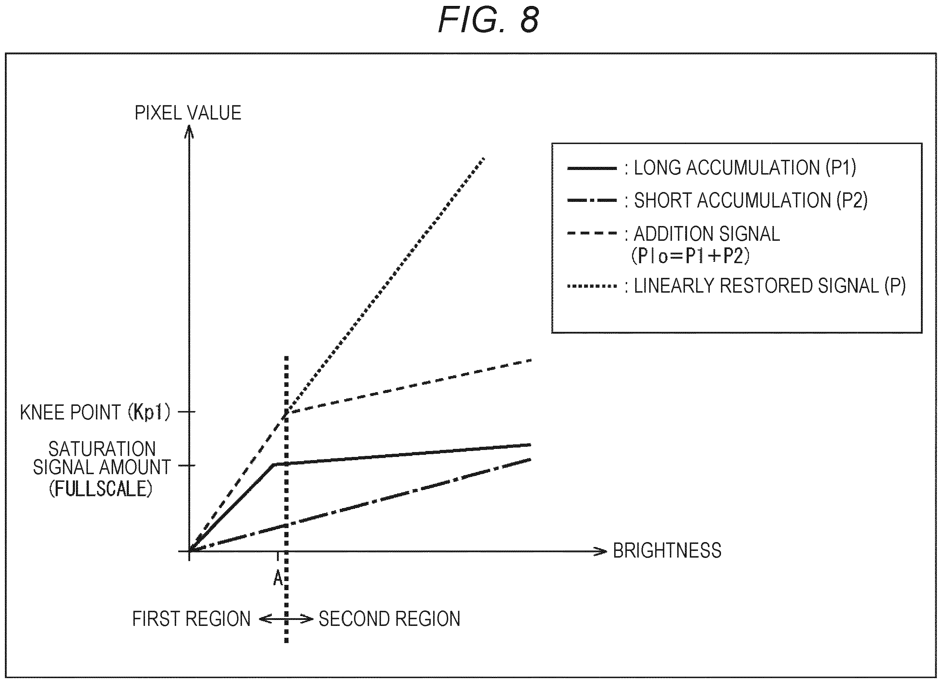

Figs. 7 and 8 are diagrams for describing the technique of the current technology.

In the technique of the current technology, a plurality of captured images (a long-accumulated image and a short-accumulated image) captured at different exposure times (T1 and T2) are synthesized, and thus the dynamic range is increased, and an addition value of a plurality of captured images (the long-accumulated image and the short-accumulated image) is constantly used. Therefore, even in the situation in which the ON state of the LED is recorded only in one captured image among the plurality of captured images exposed at different exposure timings, it is possible to prevent the occurrence of the OFF state of the LED using an image signal of the captured image including the ON state of the LED effectively.

Specifically, the technique of the current technology carries out the following process. In other words, in the technique of the current technology, first, a point (knee point Kp1) at which a slope of an addition signal Plo (Plo = P1 + P2) obtained by adding a long accumulation (P1) and a short accumulation (P2) changes is obtained. The knee point Kp1 can be regarded as a signal amount in which the long accumulation (P1) saturates, and the slope of the addition signal Plo changes.

Here, if a saturation signal amount is indicated by FULLSCALE, the following Formula (1) and Formula (2) are satisfied at a saturation point.

$$P1 = \text{FULLSCALE} \ \ldots(1)$$

$$P2 = \text{FULLSCALE} \times 1/g1 \ \ldots(2)$$

Here, in Formula (2), g1 indicates an exposure ratio (exposure time (T1) of long accumulation/exposure accumulation time (T2) of short accumulation).

Therefore, the knee point Kp1 is obtained by the following Formula (3) .

$$Kp1 = \text{Plo of saturation point} = P1 + P2 = \text{FULLSCALE} \times (1 + 1/g1) \ \ldots(3)$$

Further, in Fig. 8, a linear signal (P) which is a linearly restored signal is obtained for each of a first region and a second region if the knee point Kp1 is as a boundary.

Here, since the first region, that is, the region of Plo < Kp1 is an unsaturated region, the addition signal (Plo) can be used as the linear signal (P) without change. Therefore, in the region of Plo < Kp1, P = Plo.

On the other hand, since the second region, that is, the region of Kp1 ≤ Plo is a saturated region, it is necessary to estimate a value of the long accumulation (P1) which is saturated and has a constant value from a value of the short accumulation (P2). In the region of Kp1 ≤ Plo, in a case where an increase of Plo from Kp1 is indicated by ΔP1o, ΔP1o = ΔP2 = (Plo - Kp1). At this time, a value of ΔP1 is ΔP1 = ΔP2 × g1 (the exposure ratio times the value of P2).

Therefore, P of the region of Kp1 ≤ Plo is P = Kp1 + (Plo - Kp1) + (Plo - Kp1) × g1. Further, in a calculation formula of P, a first term on a right side indicates a start offset of the second region, a second term of the right side indicates a signal amount of the short accumulation, and a third term on the right side indicates a signal amount of the long accumulation estimated from the short accumulation.

In summary, it can be indicated as the following Formulas (4) and (5) .

(i) In the case of the region (first region) of Plo < Kp1,

$$P = \text{Plo} \ \ldots(4)$$

(ii) In the case of the region (second region) of Kp1 ≤ Plo,

$$P = Kp1 + (\text{Plo} - Kp1) \times (1 + g1) \ \ldots(5)$$

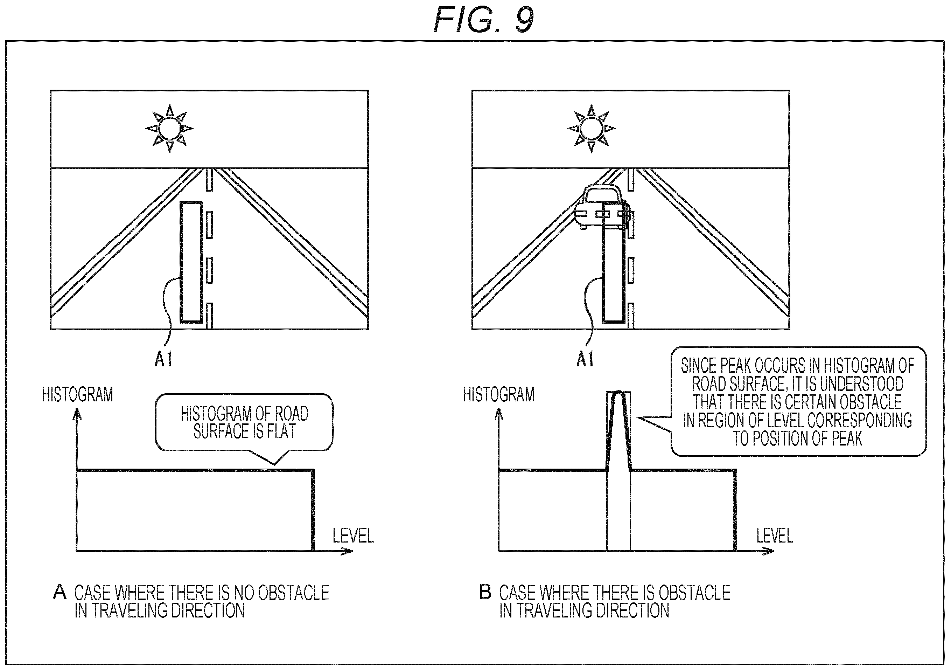

Here, a technique of acquiring a histogram in a vertical direction in an image of a front view of an automobile obtained from an imaging device and detecting a position of an obstacle (target object) from a peak position thereof has been proposed in Patent Document 3. In this technique, as illustrated in Fig. 9, a pixel value histogram is acquired in a rectangular strip region A1 along a traveling direction in a captured image of a front view of an automobile.

In A of Fig. 9, since there is no obstacle in the traveling direction, a histogram of a road surface is flat. On the other hand, in B of Fig. 9, since another vehicle is running in front of an automobile, and there is an obstacle in the traveling direction, a peak appears at a specific position with respect to the histogram of the flat road surface. Further, it is possible to detect the position of the obstacle by specifying coordinates corresponding to a luminance level of the peak.

However, in the current technology described above, when the addition signal (Plo = P1 + P2) is converted into the linear signal (P) with the increased dynamic range, a calculation formula abruptly changes before and after the knee point Kp1, there is a feature in which a noise distribution of an image becomes asymmetric. For this reason, if the histogram of the road surface is acquired, for example, in a road surface situation in which the sun is located in a traveling direction of an automobile, and the luminance changes smoothly, a pseudo spike (a histogram spike) occurs in the histogram.

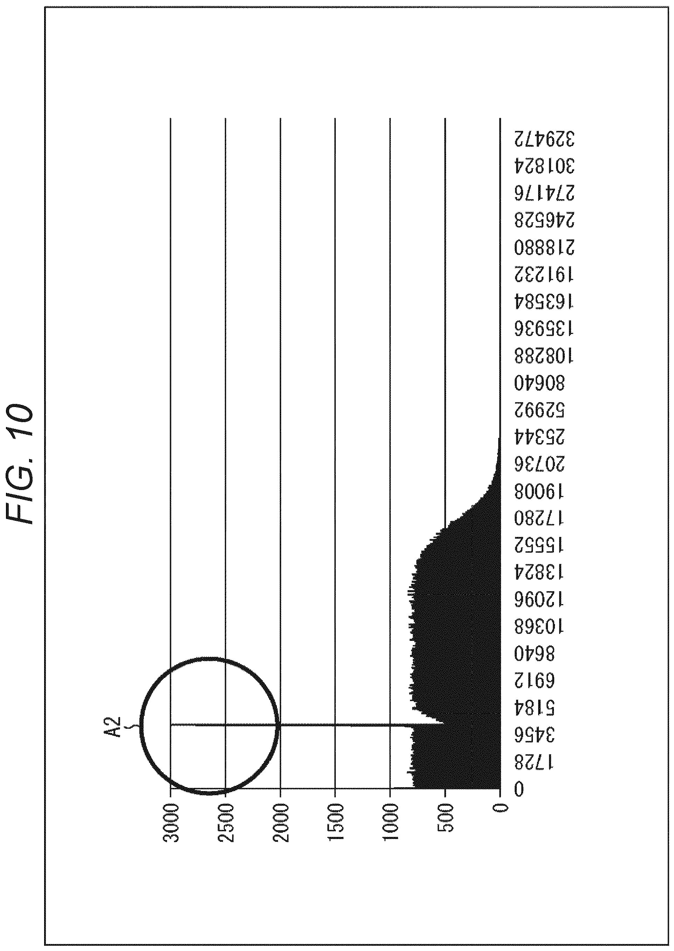

Fig. 10 illustrates an example of the histogram spike. Fig. 10 illustrates an example of a histogram obtained as a result of performing synthesis using the current technology on a signal with a smooth luminance change, but the histogram spike occurs as indicated in a frame A2 in Fig. 10.

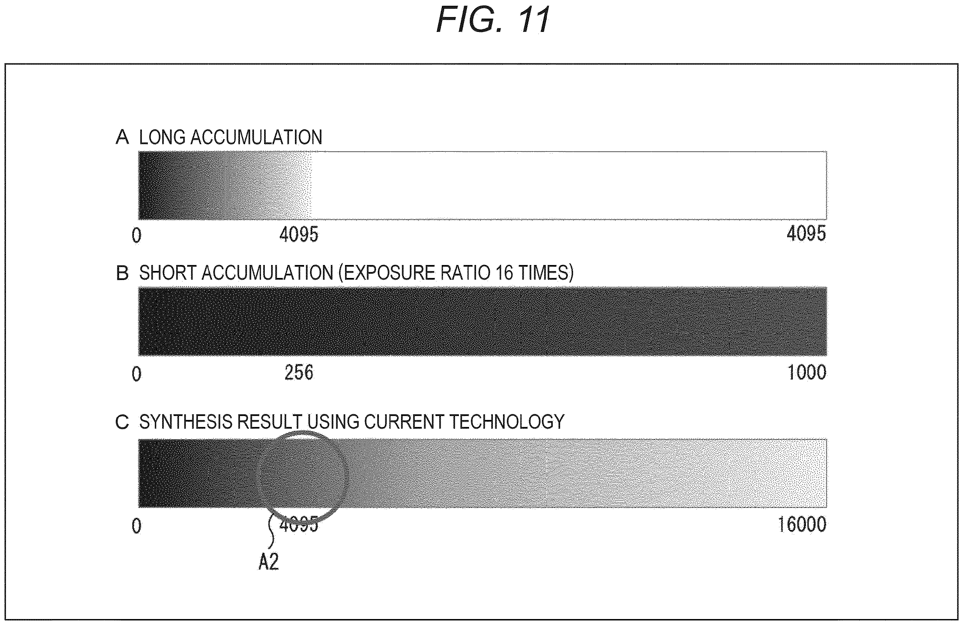

Further, a histogram spike occurrence position illustrated in Fig. 10 corresponds to a position of the synthesis result using the current technology of C of Fig. 11. However, the synthesis result of C of Fig. 11 is obtained by synthesizing the value of the long accumulation (P1) of A of Fig. 11 and the value of the short accumulation (P2) of B of Fig. 11.

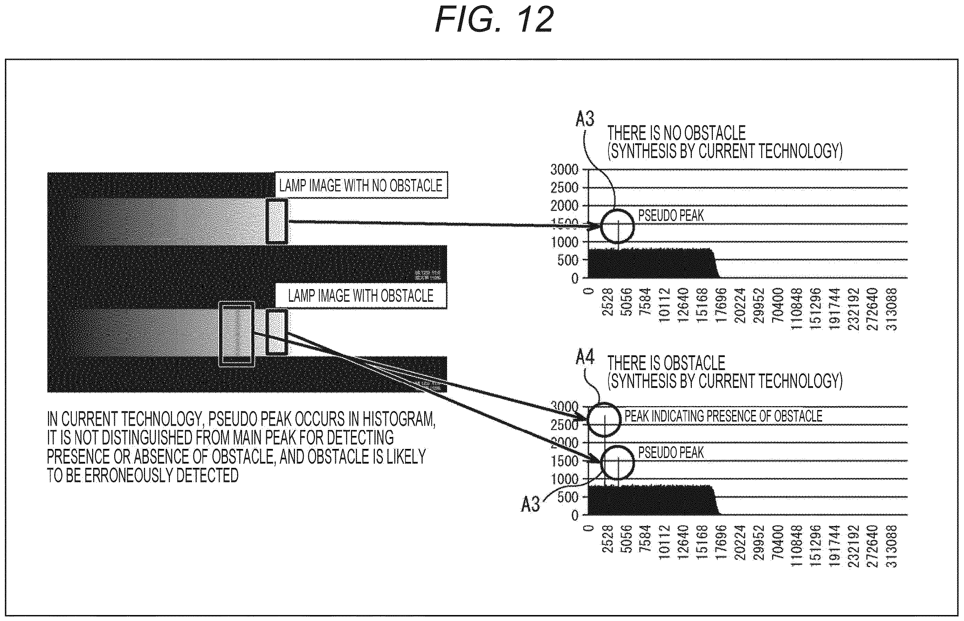

In other words, as illustrated in Fig. 12, if the synthesis using the current technology described above is performed, in a case where there is no obstacle in front of an automobile, a pseudo spike (pseudo peak) may occur in the histogram as indicated in a frame A3 in Fig. 12 even though there is actually an obstacle. Further, even in a case where there is an obstacle in front of the automobile, in addition to a peak (main peak) indicating the presence of the obstacle indicated in a frame A4 in Fig. 12, a pseudo spike (pseudo peak) is likely to occur in the histogram as indicated in the frame A3 in Fig. 12.

Further, if the pseudo spike occurs in the histogram due to the synthesis using the current technology, when an obstacle detection technique using the peak position of the histogram is applied, the pseudo peak is not distinguished from the main peak used for detecting the presence or absence of an obstacle, an obstacle is likely to be erroneously detected.

As described above, in the situation in which the luminance difference is large such that a situation in which the over exposure of the image occurs as illustrated in Fig. 1, the technique capable of generating an image not obstructing the countermeasure against the flicker of the LED illustrated in Fig. 2 and the obstacle detection using the peak position of the histogram illustrated in Fig. 9 while increasing the dynamic range of the image is not established yet. In the present technology, in order to achieve both purposes, the following three points are considered as technical features.

(1) In order to suppress the histogram spike, different clip values are set for signals of a plurality of images captured at different exposure times such as the long accumulation and the short accumulation.

(2) Further, an abrupt characteristic change in the knee point Kp is suppressed, for example, by lowering the clip value only for the signal of the long-accumulated image among the signals of a plurality of images, preparing a signal in which the position of the knee point Kp serving as a point at which a slope of an addition signal changes is lowered in parallel, and performing signal transfer while avoiding the periphery of the knee point Kp at which the histogram spike occurs.

(3) At this time, a motion correction process is performed together to thereby suppress light reduction of the high-speed blinking subject which is likely to occur when the position of the knee point Kp is lowered.

In the present technology, such technical features are provided, and thus it is possible to properly output the ON state of the high-speed blinking subject such as the LED traffic signal while suppressing the over exposure or the under exposure in the situation in which the luminance difference is very large, and it is possible to accurately detect an obstacle without erroneous detection by suppressing the histogram spike.

The technical features of the present technology will be described below with reference to a specific embodiment.

<2. Embodiment of present technology>

(Configuration example of camera unit)

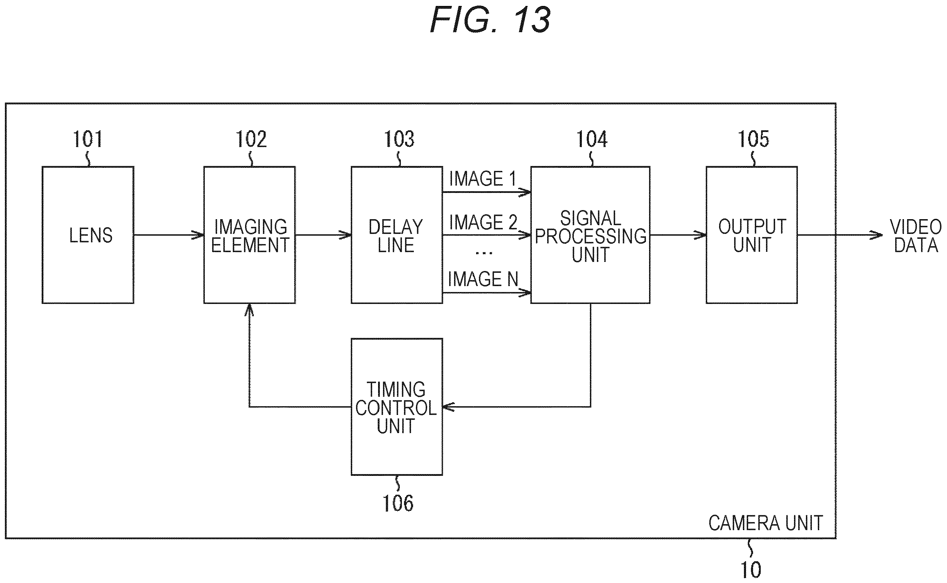

Fig. 13 is a block diagram illustrating a configuration example of an embodiment of a camera unit serving as an imaging device to which the present technology is applied.

In Fig. 13, a camera unit 10 includes a lens 101, an imaging element 102, a delay line 103, a signal processing unit 104, an output unit 105, and a timing control unit 106.

The lens 101 condenses light from a subject, and causes the light to be incident on the imaging element 102 to form an image.

The imaging element 102 is, for example, a complementary metal oxide semiconductor (CMOS) image sensor. The imaging element 102 receives the incident light from the lens 101, performs photoelectric conversion, and captures a captured image (image data) corresponding to the incident light.

In other words, the imaging element 102 functions as an imaging unit that performs imaging at an imaging timing designated by the timing control unit 106, performs imaging N times in a period of a frame rate of an output image output by the output unit 105, and sequentially outputs N captured images obtained by N times of imaging.

The delay line 103 sequentially stores the N captured images sequentially output by the imaging element 102 and simultaneously supplies the N captured images to the signal processing unit 104.

The signal processing unit 104 processes the N captured images from the delay line 103, and generates a one frame (piece) of output image. At that time, the signal processing unit 104 calculates an addition value of a pixel value of the same coordinates of the N captured images, then executes N systems of linearization processes, blends processing results, and generates an output image.

Further, the signal processing unit 104 performs processes such as, for example, noise reduction, white balance (WB) adjustment, and the like on the output image, and supplies a resulting image to the output unit 105. Further, the signal processing unit 104 detects an exposure level from the brightness of the N captured images from the delay line 103 and supplies the exposure level to the timing control unit 106.

The output unit 105 outputs the output image (video data) from the signal processing unit 104.

The timing control unit 106 controls the imaging timing of the imaging element 102. In other words, the timing control unit 106 adjusts the exposure time of the imaging element 102 on the basis of the exposure level detected by the signal processing unit 104. At this time, the timing control unit 106 performs shutter control such that the exposure timings of the N captured images are as close as possible.

The camera unit 10 is configured as described above.

(Example of shutter control of timing control unit)

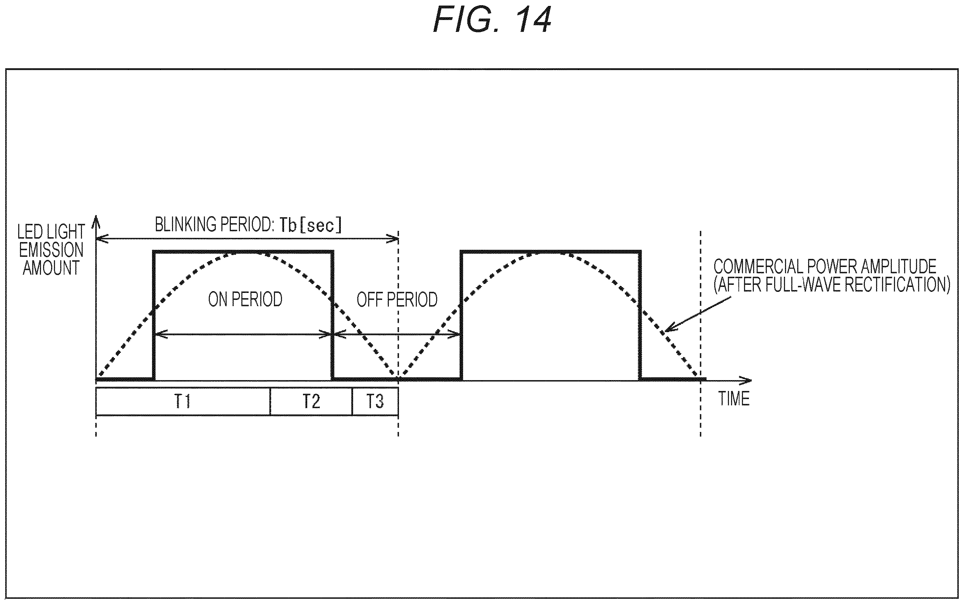

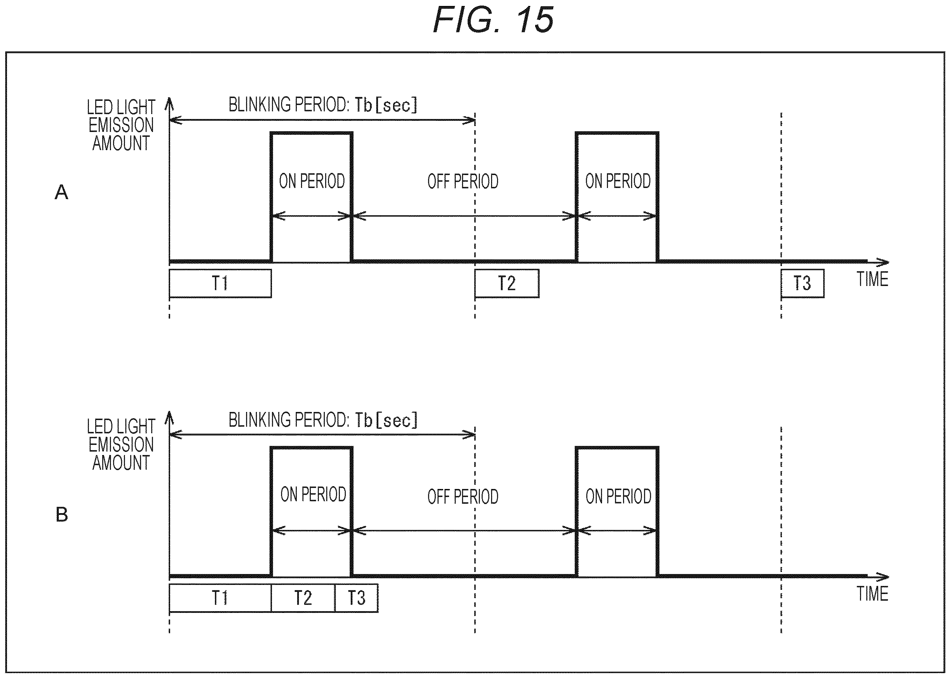

Next, the shutter control by the timing control unit 106 of Fig. 13 will be described with reference to Fig. 14 and Fig. 15.

In the camera unit 10 of Fig. 13, the imaging element 102 acquires imaging data of the N captured images with different exposure times. At this time, the timing control unit 106 performs control such that an effective exposure time is increased by bringing the imaging periods as close as possible to make it easier to cover the blinking period of the high-speed blinking subjects such as the LED.

Here, exposure timings at which three captured images are acquired will be described with reference to Fig. 14 as a specific example thereof. In Fig. 14, T1, T2, and T3 indicate exposure timings at which photographing is performed three times within one frame. A ratio of the exposure times in respective exposures can be set to, for example, a ratio of T1 : T2 : T3 = 4 : 2 : 1 in order to secure a dynamic range of a signal.

At this time, the timing control unit 106 controls an exposure timing such that exposure of T2 is started as soon as exposure of T1 is completed, and exposure of T3 is started as soon as the exposure of T2 is completed. In other words, an interval between the end of the exposure of T1 and the start of the exposure of T2 and an interval between the end of the exposure of T2 and the start of the exposure of T3 are minimized. By performing such exposure timing control, the ON period of the high-speed blinking subject is likely to overlap with one of the exposure periods of T1, T2, and T3, and it is possible to increase a probability of capturing of an image of the ON period.

Further, when the imaging periods of the N captured images are brought close to each other, the following effects can be obtained. In other words, if A of Fig. 15 is compared with B of Fig. 15, in a case where the exposure timings of T1, T2, and T3 are set apart from one another as illustrated in A of Fig. 15, in the case of a blinking light source with a short ON period (a light emission duty ratio is small), there is a possibility that the exposure timing does not overlap a light emission timing.

On the other hand, in a case where the exposure timings of T1, T2, and T3 are brought close to one another as illustrated in B of Fig. 15, the effective exposure time is extended, and thus it is possible to increase a possibility that the exposure timing overlaps the light emission timing in the blinking light source with the short ON period. Further, for example, since the OFF period of the LED traffic signal is typically assumed to be around 3 ms, the timing control unit 106 performs control in accordance with this OFF period such that the exposure timings of T1, T2, and T3 are brought close to one another.

(Configuration example of signal processing unit)

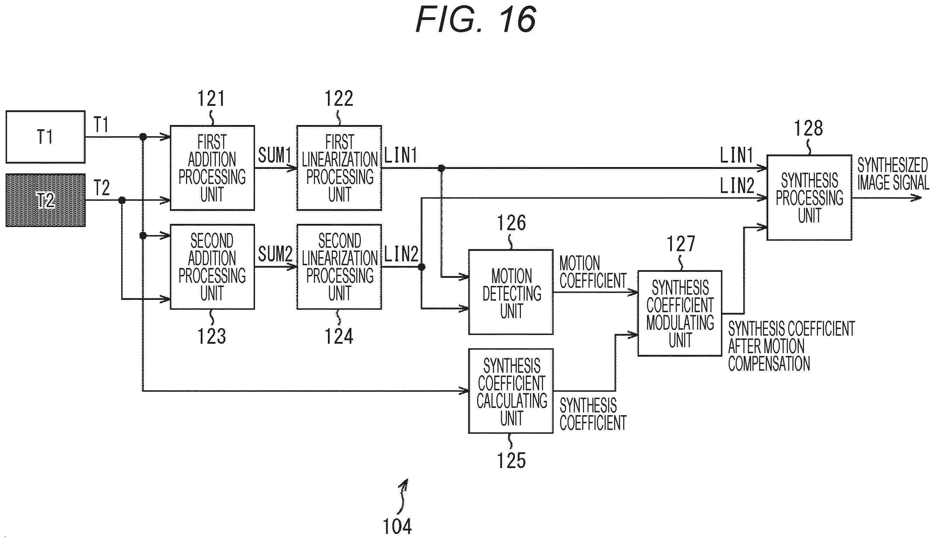

Fig. 16 is a diagram illustrating a configuration example of the signal processing unit 104 of Fig. 13.

The signal processing unit 104 of Fig. 16 processes the image data of the N captured images acquired by the imaging element 102 to be synthesized into one frame (piece) of output image. At this time, the signal processing unit 104 constantly performs synthesis on the image data of the N captured images so that a total of N-1 synthesis processes are performed.

As the simplest example, signal processing of synthesizing two captured images into one output image will be described with reference to Fig. 16.

Further, in Fig. 16, T1 and T2 indicate the captured images corresponding to the respective exposure times at which imaging is performed twice within one frame. Further, in Fig. 16, it is assumed that the ratio of exposure time in each exposure is, for example, a ratio of T1 : T2 = 16 : 1 in order to secure the dynamic range of signal. If an exposure ratio gain for adjusting brightness of T2 to T1 is defined as G1, G1 = exposure time of T1/exposure time of T2 = 16 [times]. Hereinafter, captured images corresponding to T1 and T2 are also referred to as an image signal T1 and an image signal T2, respectively.

In Fig. 16, the signal processing unit 104 includes a first addition processing unit 121, a first linearization processing unit 122, a second addition processing unit 123, a second linearization processing unit 124, a synthesis coefficient calculating unit 125, a motion detecting unit 126, a synthesis coefficient modulating unit 127, and a synthesis processing unit 128.

The first addition processing unit 121 performs a first addition process for adding the image signal T1 and the image signal T2 input thereto, and generates an addition signal SUM1. The first addition processing unit 121 supplies the addition signal SUM1 obtained by the first addition process to the first linearization processing unit 122.

Specifically, in the first addition process, after an upper limit clip process is performed on the values of the image signal T1 and the image signal T2 using a predetermined value, addition of signals obtained as a result is performed.

Here, in the upper limit clip process, clip values of the image signal T1 and the image signal T2 in the first addition process are set. Further, the clip value (upper limit clip value) can be regarded as a saturation value (saturation signal amount) or a limit value. For example, in a case where the clip value of the image signal T1 is indicated by CLIP_T1_1, and the clip value of the image signal T2 is indicated by CLIP T2 1, the following Formula (6) is calculated in the first addition process to obtain the addition signal SUM1.

$$SUM1 = MIN(CLIP\_T1\_1, T1) + MIN(CLIP\_T2\_1, T2) ...(6)$$

Here, in Formula (6), a function that is MIN(a, b) means that the upper limit value (the saturation value or the limit value) of "b" is "a". Further, the meaning of this function is similarly applied in Formulas to be described later.

The first linearization processing unit 122 performs a first linearization process with reference to the addition signal SUM1 from the first addition processing unit 121 and generates a linear signal LIN1 which is linear with respect to brightness. The first linearization processing unit 122 supplies the linear signal LIN1 obtained by the first linearization process to the motion detecting unit 126 and the synthesis processing unit 128.

Specifically, in this first linearization process, in a case where exposure ratio G1 = exposure time of T1/exposure time of T2, the position of the knee point Kp is obtained by the following Formula (7).

$$KP1\_1 = CLIP\_T1\_1 \times (1 + 1/G1) ...(7)$$

Then, in the first linearization process, the linear signal LIN1 is obtained by the following Formula (8) or Formula (9) in accordance with the regions of the addition signal SUM1 and the knee point Kp (KP1_1).

(i) In the case of the region of SUM1 < KP1_1,

$$LIN1 = SUM1 ...(8)$$

(ii) In the case of KP11 ≤ SUM1 region,

$$LIN1 = KP1\_1 + (SUM1 - KP1\_1) \times (1 + G1) ...(9)$$

The second addition processing unit 123 performs a second addition process for adding the image signal T1 and the image signal T2 input thereto, and generates an addition signal SUM2. The second addition processing unit 123 supplies the addition signal SUM2 obtained by the second addition process to the second linearization processing unit 124.

Specifically, in this second addition process, after the upper limit clip process is performed on the values of the image signal T1 and the image signal T2 using a value different from that in the first addition process described above, addition of signals obtained as a result is performed.

Here, in the upper limit clip process, clip values of the image signal T1 and the image signal T2 in the second addition process are set. For example, in a case where the clip value of the image signal T1 is indicated by CLIP T1 2, and the clip value of the image signal T2 is indicated by CLIP_T2_2, the following Formula (10) is calculated in the second addition process to obtain the addition signal SUM2.

$$SUM2 = MIN(CLIP\_T1\_2, T1) + MIN(CLIP\_T2\_2, T2) ...(10)$$

The second linearization processing unit 124 performs a second linearization process with reference to the addition signal SUM2 from the second addition processing unit 123 and generates a linear signal LIN2 which is linear with respect to brightness. The second linearization processing unit 124 supplies the linear signal LIN2 obtained by the second linearization process to the motion detecting unit 126 and the synthesis processing unit 128.

Specifically, in the second linearization process, in a case where exposure ratio G1 = exposure time of T1/exposure time/T2, the position of the knee point Kp is obtained by the following Formula (11).

$$KP1\_2 = CLIP\_T1\_2 \times (1 + 1/G1) \ ...(11)$$

Further, in the second linearization process, the linear signal LIN2 is obtained by the following Formula (12) or Formula (13) in accordance with the addition signal SUM2 and the region of the knee point Kp (KP1_2).

(i) In the case of the region of SUM2 < KP1_2,

$$LIN2 = SUM2 \ ...(12)$$

(ii) In the case of the region of KP1_2 $\leq$ SUM2,

$$LIN2 = KP1\_2 + (SUM2 - KP1\_2) \times (1 + G1) \ ...(13)$$

The synthesis coefficient calculating unit 125 calculates a synthesis coefficient for synthesizing the linear signal LIN1 and the linear signal LIN2 with reference to the image signal T1. The synthesis coefficient calculating unit 125 supplies the calculated synthesis coefficient to the synthesis coefficient modulating unit 127.

Specifically, if a threshold value at which synthesis (blending) of the linear signal LIN2 for the linear signal LIN1 is started is indicated by BLD_TH_LOW, a synthesis rate (blending ratio) is 1.0, and a threshold value at which the linear signal LIN2 is 100% is indicated by BLD_TH_HIGH, the synthesis coefficient is obtained from the following Formula (14). In this case, here, the signal is clipped in a range of 0 to 1.0.

$$Synthesis \ coefficient = (T1 - BLD\_TH\_LOW) \div (BLD\_TH\_HIGH - BLD\_TH\_LOW)$$
$$...(14)$$

The motion detecting unit 126 defines a difference between the linear signal LIN1 from the first linearization processing unit 122 and the linear signal LIN2 from the second linearization processing unit 124 as a motion amount, and performs motion determination. At this time, in order to distinguish noise of a signal and blinking of the high-speed blinking body such as the LED, the motion detecting unit 126 compares the motion amount with a noise amount expected from a sensor characteristic, and calculates the motion coefficient. The motion detecting unit 126 supplies the calculated motion coefficient to the synthesis coefficient modulating unit 127.

Specifically, if an upper limit value of a level determined not to be 100% motion with respect to the difference is indicated by MDET_TH_LOW, and a level determined to be 100% motion is indicated by MDET TH HIGH, the motion coefficient is obtained by the following Formula (15). Here, however, the signal is clipped in a range of 0 to 1.0.

$$Motion \ coefficient = (ABS(LIN1 - LIN2) - MDET\_TH\_LOW) \div (MDET\_TH\_HIGH$$
$$- MDET\_TH\_LOW) \ ...(15)$$

However, in Formula (15), ABS() means a function that returns an absolute value. Further, the meaning of this function is similar in formulas to be described later.

The synthesis coefficient modulating unit 127 performs modulation in which the motion coefficient from the motion detecting unit 126 is added to the synthesis coefficient from the synthesis coefficient calculating unit 125, and calculates a post motion compensation synthesis coefficient. The synthesis coefficient modulating unit 127 supplies the calculated post motion compensation synthesis coefficient to the synthesis processing unit 128.

Specifically, the post motion compensation synthesis coefficient is obtained by the following Formula (16). Here, however, the signal is clipped in a range of 0 to 1.0.

```
     Post motion compensation synthesis coefficient = synthesis
  coefficient - motion coefficient ...(16)
```

The synthesis processing unit 128 synthesizes (alphablends) the linear signal LIN1 from the first linearization processing unit 122 and the linear signal LIN2 from the second linearization processing unit 124 using the post motion compensation synthesis coefficient from the synthesis coefficient modulating unit 127, and outputs a synthesized image signal serving as a high dynamic range (HDR) -synthesized signal obtained as a result.
Specifically, the synthesized image signal is obtained by the following Formula (17).

```
    Synthesized image signal = (LIN2 - LIN1) × post motion compensation
synthesis coefficient + LIN1 ...(17)
```

The signal processing unit 104 is configured as described above.

(Signal processing in case where dual synthesis is performed)

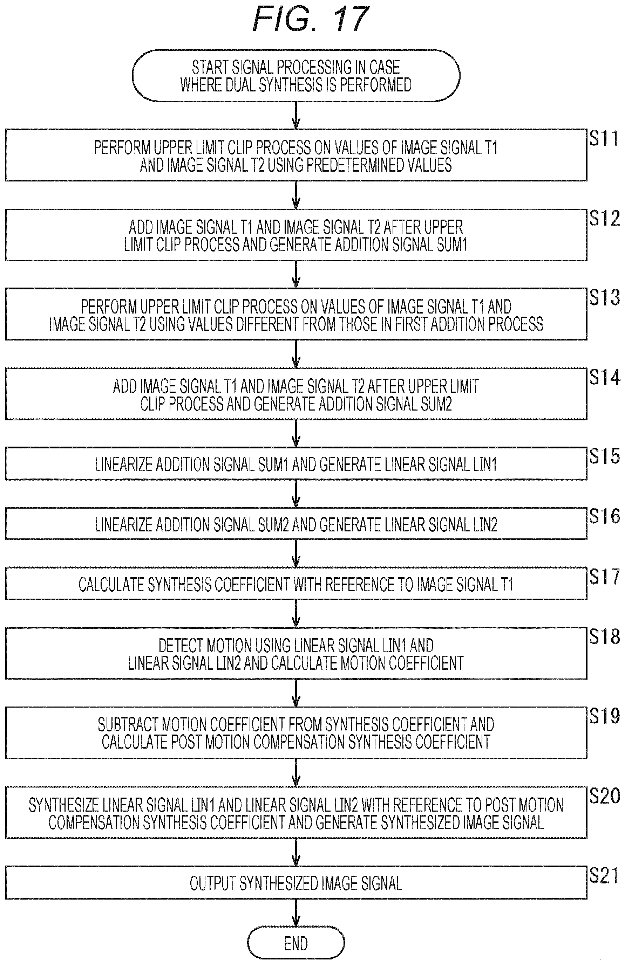

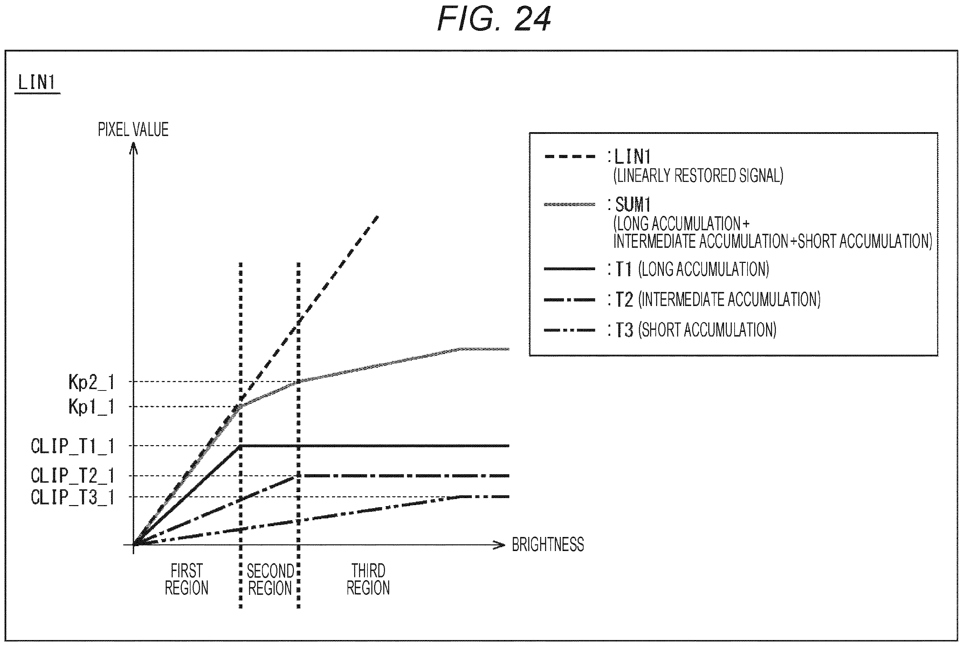

Next, a flow of signal processing in a case where the dual synthesis is executed by the signal processing unit 104 of Fig. 16 will be described with reference to a flowchart of Fig. 17.
In step S11, the first addition processing unit 121 performs the upper limit clip process on the values of the image signal T1 and the image signal T2 using predetermined clip values (CLIP_T1_1, CLIP_T2_1).
In step S12, the first addition processing unit 121 adds the image signal T1 and the image signal T2 after the upper limit clip process of step S11 by calculating Formula (6), and generates the addition signal SUM1.
In step S13, the second addition processing unit 123 performs the upper limit clip process on the values of the image signal T1 and the image signal T2 using the clip values (CLIP T1 2, CLIP_T2_2) different from those in the first addition process (S11 and S12).
In step S14, the second addition processing unit 123 adds the image signal T1 and the image signal T2 after the upper limit clip process which are obtained in the process of step S13 by calculating Formula (10), and generates the addition signal SUM2.
Further, the exposure time ratio of T1 and T2 can be, for example, a ratio of T1 : T2 = 16 : 1. Therefore, the image signal T1 can be regarded as the long period exposure image (long-accumulated image), while the image signal T2 can be regarded as the short period exposure image (short-accumulated image). Further, for example, as the clip value set for the image signal T1 which is the long-accumulated image, the clip value (CLIP_T1_2) used in the second addition process (S13 and S14) can be made smaller than the clip value (CLIP_T1_1) used in the first addition process (S11 and S12).
In step S15, the first linearization processing unit 122 linearizes the addition signal SUM1 obtained in the process of step S12 by calculating Formulas (7) to (9), and generates the linear signal LIN1.
In step S16, the second linearization processing unit 124 linearizes the addition signal SUM2 obtained in the process of step S14 by calculating Formulas (11) to (13), and generates a linear signal LIN2.
In step S17, the synthesis coefficient calculating unit 125 calculates the synthesis coefficient by calculating Formula (14) with reference to the image signal T1.
In step S18, the motion detecting unit 126 detects a motion using the linear signal LIN1 obtained in the process of step S15 and the linear signal LIN2 obtained in the process of step S16, and calculates a motion coefficient by calculating Formula (15).
In step S19, the synthesis coefficient modulating unit 127 subtracts the motion coefficient obtained in the process of step S18 from the synthesis coefficient obtained in the process of step S17 by calculating Formula (16), and calculates the post motion compensation synthesis coefficient.
In step S20, the synthesis processing unit 128 synthesizes the linear signal LIN1 obtained in the process of step S15 and, and the linear signal LIN2 obtained in the process of step S16 by calculating Formula (17) with reference to the post motion compensation synthesis coefficient obtained in the process of step S19, and generates a synthesized image signal.
Further, although the synthesis process of the linear signal LIN1 and the linear signal LIN2 will be described later in detail with reference to Figs. 24 to 27, here, since the synthesis corresponding to the post motion compensation synthesis coefficient is performed, the linear signal LIN1 and the linear signal LIN2 are synthesized while avoiding the periphery of the knee point Kp at which the histogram spike occurs. In other words, it is possible to suppress the histogram spike by shifting the occurrence position of the histogram spike so that transfer is smoothly performed from the linear signal LIN1 side to the linear signal LIN2 side with a different knee point Kp before the long accumulation is saturated (before the histogram spike occurs).

In step S21, the synthesis processing unit 128 outputs the synthesized image signal obtained in the process of step S20.

The flow of the signal processing in a case where the dual synthesis is performed has been described above.

(Example of processing result of signal processing unit)

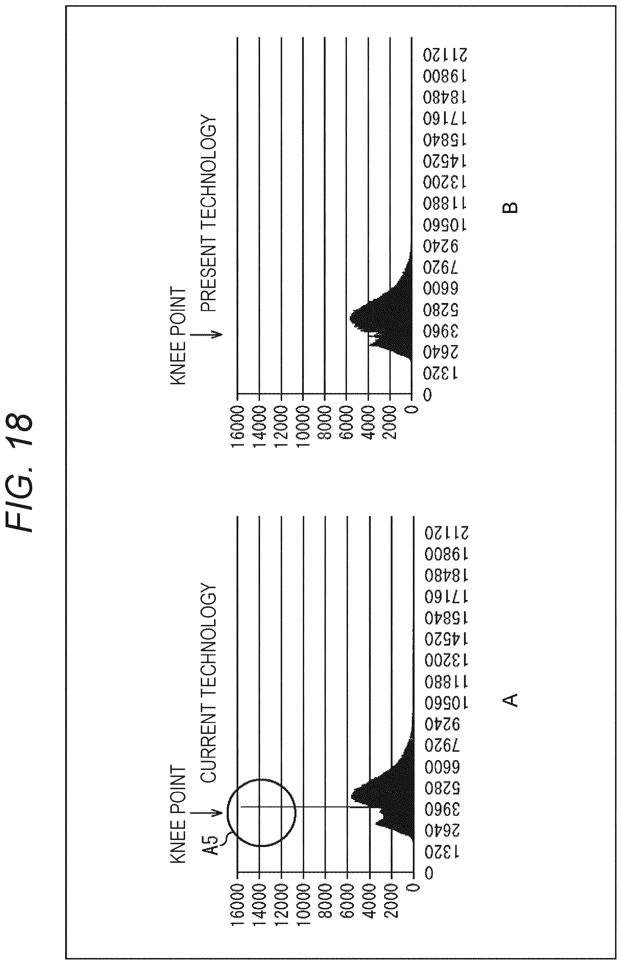

Next, the processing result of the signal processing (Fig. 17) by the signal processing unit 104 of Fig. 16 will be described with reference to Figs. 18 to 20.

Fig. 18 illustrates an example of the processing result of the signal processing. Further, here, A of Fig. 18 illustrates the processing result in the case of using the technique of the current technology described above and is compared with the processing result in the case of using the present technology of B of Fig. 18.

In the case of the technique of the current technology in A of Fig. 18, since the process changes abruptly with the brightness around the boundary in which the long accumulation is saturated as indicated in a frame A5 in Fig. 18, the pseudo spike of the histogram (pseudo peak) occurs. As a result, as described above, although there is actually no obstacle, it is erroneously detected that there is an obstacle.

On the other hand, in the case of the technique of the present technology in B of Fig. 18, different clip values are set, and the occurrence position of the histogram spike is shifted for each linear signal LIN so that the transfer is smoothly performed from the linear signal LIN1 side to the linear signal LIN2 side with a different knee point Kp until the long accumulation is saturated (before the histogram spike occurs). Therefore, in B of Fig. 18, it is possible to suppress the erroneous detection indicating that there is an obstacle although that a pseudo spike (pseudo peak) does not occur and there is actually no obstacle.

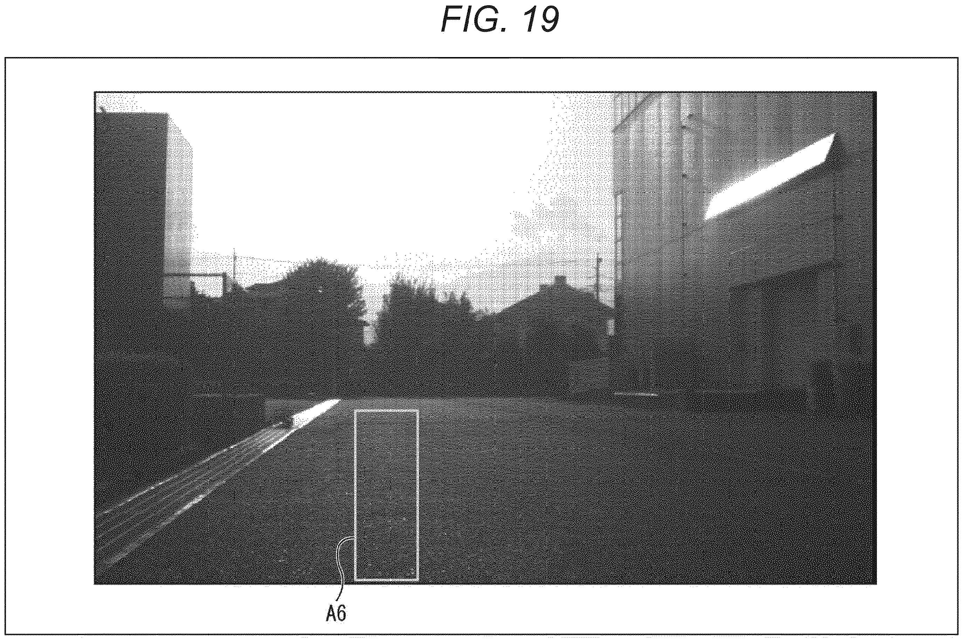

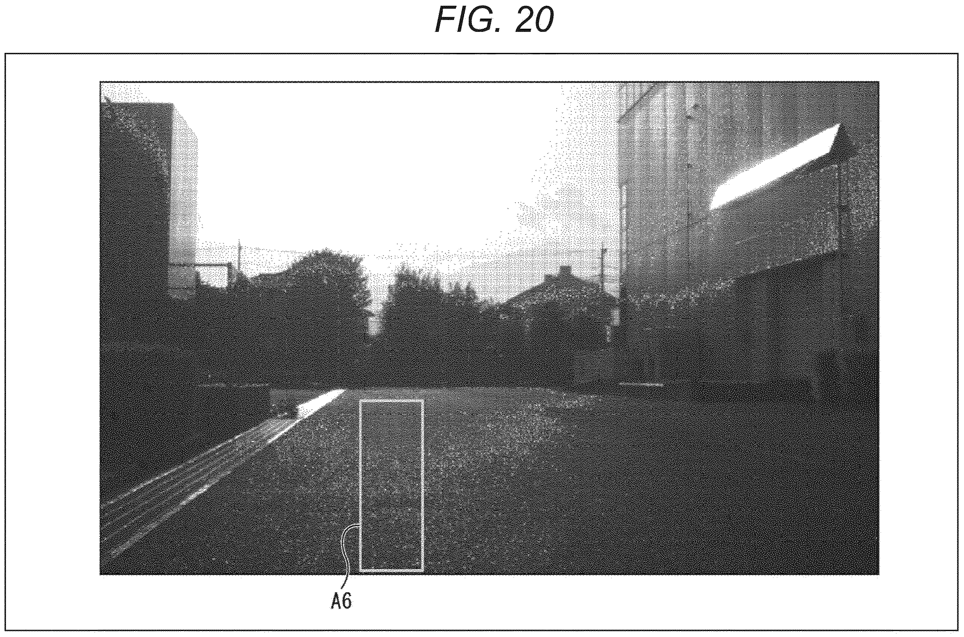

Further, Figs. 19 and 20 illustrate examples of actual captured images. In other words, Figs. 19 and 20 illustrate the results of the signal processing in the case of using the technique of the current technology. In the signal processing for these captured images, a histogram in a direction along a road is acquired in a backlight situation in which the sun is located in front, but in Fig. 20, a position of a pixel corresponding to a luminance level of a spike in the histogram is highlighted and displayed so that the occurrence position of the spike in the captured image is understood (for example, in a frame A6 in Fig. 20 or the like) . In Fig. 20, in a case where there is a bright light source such as the sun in front in the traveling direction, there is a region in which a spike occurs annually.

<3. Modified example of embodiment of present technology>

(Configuration example of signal processing unit in case where triple synthesis is performed)

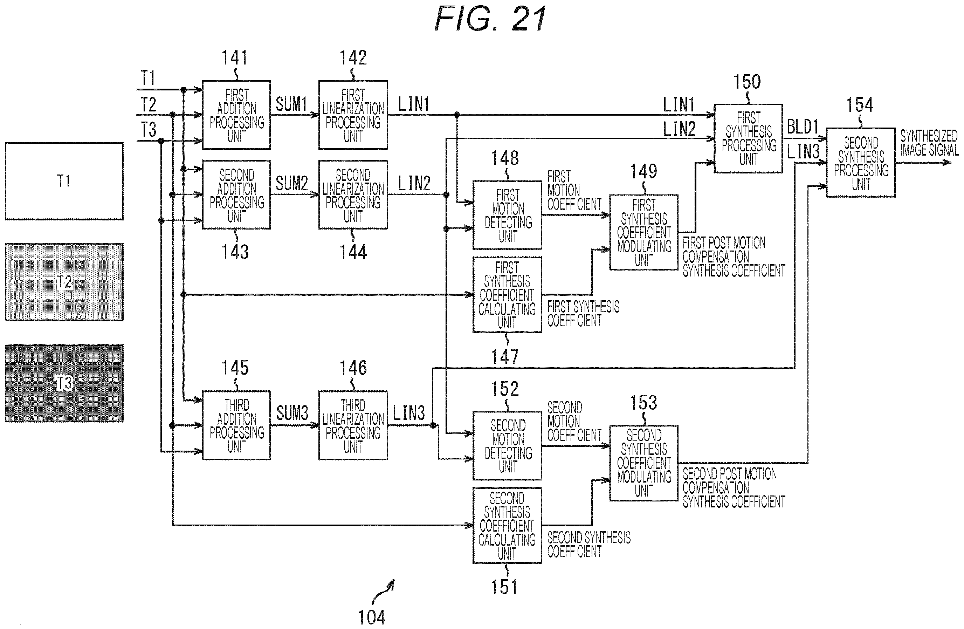

Fig. 21 is a diagram illustrating a configuration example of the signal processing unit 104 in a case where triple synthesis is performed.

In other words, in the above description, as the simplest example, the signal processing for synthesizing two captured images into one output image has been described, but signal processing for synthesizing three captured images into one output image will be described with reference to Fig. 21.

Further, in Fig. 21, T1, T2, and T3 indicate captured images corresponding to respective exposure times when imaging is performed three times within one frame. Further, in Fig. 21, it is assumed that a ratio of the exposure times in respective exposures is, for example, a ratio of T1 : T2 : T3 = 4 : 2 : 1 in order to secure the dynamic range of the signal. An exposure ratio gain for adjusting brightness of T2 to T1 is defined as G1 and an exposure ratio gain for adjusting brightness of T3 to T2 is defined as G2. In the above example, G1 = 2, and G2 = 2. Hereinafter, captured images corresponding to T1, T2, T3 are also referred to as an image signal T1, an image signal T2, and an image signal T3, respectively.

In Fig. 21, the signal processing unit 104 includes a first addition processing unit 141, a first linearization processing unit 142, a second addition processing unit 143, a second linearization processing unit 144, a third addition processing unit 145, a third linearization processing unit 146, a first synthesis coefficient calculating unit 147, a first motion detecting unit 148, a first synthesis coefficient modulating unit 149, a first synthesis processing unit 150, a second synthesis coefficient calculating unit 151, a second motion detecting unit 152, a second synthesis coefficient modulating unit 153, and a second synthesis processing unit 154.

The first addition processing unit 141 performs a first addition process of adding the image signal T1, the image signal T2, and the image signal T3 input thereto, and generates an addition signal SUM1. The first addition processing unit 141 supplies the addition signal SUM1 obtained by the first addition process to the first linearization processing unit 142.

Specifically, in the first addition process, after the upper limit clip process is performed on the values of the image signals T1, T2, and T3 using a predetermined value, addition of the signals obtained as a result is performed.

Here, in the upper limit clip process, clip values of the image signals T1, T2, and T3 in the first addition process are set. For example, in a case where the clip value of the image signal T1 is indicated by CLIP_T1_1, the clip value of the image signal T2 is indicated by CLIP_T2_1, and the clip value of the image signal T3 is indicated by CLIP_T3_1, in the first addition process, the addition signal SUM1 is obtained by calculating the following Formula (18).

$$SUM1 = MIN(CLIP\_T1\_1, T1) + MIN(CLIP\_T2\_1, T2) + MIN(CLIP\_T3\_1, T3) \ ...(18)$$

The first linearization processing unit 142 performs a first linearization process with reference to the addition signal SUM1 from the first addition processing unit 141 and generates a linear signal LIN1 which is linear with respect to brightness. The first linearization processing unit 142 supplies the linear signal LIN1 obtained by the first linearization process to the first motion detecting unit 148 and the first synthesis processing unit 150.

Specifically, in the first linearization process, in a case where exposure ratio G1 = exposure time of T1/exposure time of T2, and exposure ratio G2 = exposure time of T2/ exposure time of T3, a position of the knee point Kp (KP1_1, KP2_1) is obtained by the following Formula (19) or (20) .

$$KP1\_1 = CLIP\_T1\_1 \times (1 + 1/G1 + 1/(G1 \times G2)) \ ...(19)$$

$$KP2\_1 = CLIP\_T1\_1 + CLIP\_T2\_1 \times (1 + 1/G2) \ ...(20)$$

Further, in the first linearization process, the linear signal LIN1 is obtained by the following Formulas (21) to (23) in accordance with the regions of the addition signal SUM1 and the knee point Kp (KP1_1, KP2_1).

(i) In the case of the region of SUM1 < KP1_1,

$$LIN1 = SUM1 \ ...(21)$$

(ii) In the case of the region of KP1_1 $\leq$ SUM1 < KP2_1,

$$LIN1 = KP1\_1 + (SUM1 - KP1\_1) \times (1 + G1 \times G2/(1 + G2)) \ ...(22)$$

(iii) In the case of the region of KP2_1 $\leq$ SUM1,

$$LIN1 = KP2\_1 + (KP2\_1 - KP1\_1) \times (1 + G1 \times G2/(1 + G2)) + (SUM1 - KP2\_1) \times (1 + G2 + G1 \times G2) \ ...(23)$$

The second addition processing unit 143 performs a second addition process of adding the image signal T1, the image signal T2, and the image signal T3 input thereto, and generates an addition signal SUM2. The second addition processing unit 143 supplies the addition signal SUM2 obtained by the second addition process to the second linearization processing unit 144.

Specifically, in the second addition process, after the upper limit clip process is performed on the values of the image signals T1, T2, and T3 using predetermined values, addition of signals obtained as a result is performed.

Here, in the upper limit clip process, clip values of the image signal T1, T2, T3 in the second addition process are set. For example, in a case where the clip value of the image signal T1 is indicated by CLIP_T1_2, the clip value of the image signal T2 is indicated by CLIP_T2_2, and the clip value of the image signal T3 is indicated by CLIP_T3_2, in the second addition process, the addition signal SUM2 is obtained by calculating the following Formula (24).

$$SUM2 = MIN(CLIP\_T1\_2, T1) + MIN(CLIP\_T2\_2, T2) + MIN(CLIP\_T3\_2, T3) \ ...(24)$$

The second linearization processing unit 144 performs a second linearization process with reference to the addition signal SUM2 from the second addition processing unit 143, and generates a linear signal LIN2 which is linear with respect to brightness. The second linearization processing unit 144 supplies the linear signal LIN2 obtained by the second linearization process to the first motion detecting unit 148, the first synthesis processing unit 150, and the second motion detecting unit 152.

Specifically, in the second linearization process, in a case where exposure ratio G1 = exposure time of T1/exposure time/T2 and exposure ratio G2 = exposure time of T2/exposure time of T3, a position of the knee point Kp (KP1_2, KP2_2) is obtained by the following Formula (25) or (26).

$$KP1\_2 = CLIP\_T1\_2 \times (1 + 1/G1 + 1/(G1 \times G2)) \ ...(25)$$

$$KP2\_2 = CLIP\_T1\_2 + CLIP\_T2\_2 \times (1 + 1/G2) \ ...(26)$$

Further, in the second linearization process, the linear signal LIN2 is obtained by the following Formulas (27) to (29) in accordance with the regions of the addition signal SUM2 and the knee point Kp (KP1_2, KP2 2) .

(i) In a case where SUM2 < KP1_2,

$$LIN2 = SUM2 \ ...(27)$$

(ii) In the case of the region of KP1_2 ≤ SUM2 < KP2_2,

$$LIN2 = KP1\_2 + (SUM2 - KP1\_2) \times (1 + G1 \times G2/(1 + G2)) \ ...(28)$$

(iii) In the case of the region of KP2_2 ≤ SUM2,

$$LIN2 = KP2\_2 + (KP2\_2 - KP1\_2) \times (1 + G1 \times G2/(1 + G2)) + (SUM2 - KP2\_2) \times (1 + G2 + G1 \times G2) \ ...(29)$$

The third addition processing unit 145 performs a third addition process for adding the image signal T1, the image signal T2, and the image signal T3 input thereto, and generates an addition signal SUM3. The third addition processing unit 145 supplies the addition signal SUM3 obtained by the third addition process to the third linearization processing unit 146.

Specifically, in the third addition process, after the upper limit clip process is performed on the values of the image signals T1, T2, and T3 using predetermined values, addition of signals obtained as a result is performed.

Here, in the upper limit clip process, clip values of the image signals T1, T2, T3 in the third addition process are set. For example, in a case where the clip value of the image signal T1 is indicated by CLIP_T1_3, the clip value of the image signal T2 is indicated by CLIP_T2_3, and the clip value of the image signal T3 is indicated by CLIP_T3_3, in the third addition process, addition signal SUM3 is obtained by calculating the following Formula (30) .

$$SUM3 = MIN(CLIP\_T1\_3, T1) + MIN(CLIP\_T2\_3, T2) + MIN(CLIP\_T3\_3, T3) \ ...(30)$$

The third linearization processing unit 146 performs a third linearization process with reference to the addition signal SUM3 from the third addition processing unit 145, and generates a linear signal LIN3 which is linear with respect to brightness. The third linearization processing unit 146 supplies the linear signal LIN3 obtained by the third linearization process to the second motion detecting unit 152 and the second synthesis processing unit 154.

Specifically, in the third linearization process, in a case where exposure ratio G1 = exposure time of T1/exposure time/T2 and exposure ratio G2 = exposure time of T2/exposure time of T3, a position of the knee point Kp (KP1_3, KP2_3) is obtained by the following Formula (31) or (32).

$$KP1\_3 = CLIP\_T1\_3 \times (1 + 1/G1 + 1/(G1 \times G2)) \ ...(31)$$

$$KP2\_3 = CLIP\_T1\_3 + CLIP\_T2\_3 \times (1 + 1/G2) \ ...(32)$$

Further, in the third linearization process, the linear signal LIN3 is obtained by the following Formulas (33) to (35) in accordance with the regions of the addition signal SUM3 and the knee point Kp (KP1_3, KP2 3) .

(i) In the case of the region of SUM3 < KP1_3,

$$LIN3 = SUM3 \ ...(33)$$

(ii) In the case of the region of KP1_3 ≤ SUM3 < KP2_3,

$$LIN3 = KP1\_3 + (SUM3 - KP1\_3) \times (1 + G1 \times G2/(1 + G2)) \ ...(34)$$

(iii) In the case of the region of KP2_3 ≤ SUM3,

$$LIN3 = KP2\_3 + (KP2\_3 - KP1\_3) \times (1 + G1 \times G2/(1 + G2)) + (SUM3 - KP2\_3) \times (1 + G2 + G1 \times G2) \ ...(35)$$

The first synthesis coefficient calculating unit 147 calculates a first synthesis coefficient for synthesizing the linear signal LIN1 and the linear signal LIN2 with reference to the image signal T1. The first synthesis coefficient calculating unit 147 supplies the calculated first synthesis coefficient to the first synthesis coefficient modulating unit 149.

Specifically, if a threshold value at which synthesis (blending) of the linear signal LIN2 for the linear signal LIN1 is started is indicated by BLD-TH-L-LOW, a synthesis rate (blending ratio) is 1.0, and a threshold value at which the linear signal LIN2 is 100% is indicated by BLD_TH_L_HIGH, the first synthesis coefficient is obtained from the following Formula (36) . Here, however, the signal is clipped in a range of 0 to 1.0.

$$First\ synthesis\ coefficient = (T1 - BLD\_TH\_L\_LOW) \div (BLD\_TH\_L\_HIGH - BLD\_TH\_L\_LOW) \ ...(36)$$

The first motion detecting unit 148 defines a difference between the linear signal LIN1 from the first linearization processing unit 142 and the linear signal LIN2 from the second linearization processing unit 144 as a motion amount and performs motion determination. At this time, in order to distinguish noise of a signal and blinking of the high-speed blinking body such as the LED, the first motion detecting unit 148 compares the motion amount with a noise amount expected from a sensor characteristic, and calculates a first motion coefficient. The first motion detecting unit 148 supplies the calculated first motion coefficient to the first synthesis coefficient modulating unit 149.

Specifically, if an upper limit value of a level determined not to be 100% motion with respect to the difference is indicated by MDET_TH_LOW, and a level determined to be 100% motion is indicated by MDET TH HIGH, the first motion coefficient is obtained by the following Formula (37). Here, however, the signal is clipped in a range of 0 to 1.0.

$$\text{First motion coefficient} = (\text{ABS}(\text{LIN1} - \text{LIN2}) - \text{MDET\_TH\_LOW}) \div$$
$$(\text{MDET\_TH\_HIGH} - \text{MDET\_TH\_LOW}) \ ...(37)$$

The first synthesis coefficient modulating unit 149 performs modulation in which the first motion coefficient from the first motion detecting unit 148 is added to the first synthesis coefficient from the first synthesis coefficient calculating unit 147 and calculates a first post motion compensation synthesis coefficient. The first synthesis coefficient modulating unit 149 supplies the calculated first post motion compensation synthesis coefficient to the first synthesis processing unit 150.

Specifically, the first post motion compensation synthesis coefficient is obtained by the following Formula (38). Here, however, the signal is clipped in a range of 0 to 1.0.

$$\text{First post motion compensation synthesis coefficient} = \text{first synthesis}$$
$$\text{coefficient} - \text{first motion coefficient} \ ...(38)$$

The first synthesis processing unit 150 synthesizes (alpha blends) the linear signal LIN1 from the first linearization processing unit 142 and the linear signal LIN2 from the second linearization processing unit 144 using the first post motion compensation synthesis coefficient from the first synthesis coefficient modulating unit 149. The first synthesis processing unit 150 supplies a synthesis signal BLD1 obtained as a result of synthesis to the second synthesis processing unit 154.

Specifically, the synthesis signal BLD1 is obtained by the following Formula (39).

$$\text{Synthesis signal BLD1} = (\text{LIN2} - \text{LIN1}) \times \text{first post motion compensation}$$
$$\text{synthesis coefficient} + \text{LIN1} \ ...(39)$$

The second synthesis coefficient calculating unit 151 calculates a second synthesis coefficient for synthesizing the synthesis signal BLD1 and the linear signal LIN3 with reference to the image signal T2. The second synthesis coefficient calculating unit 151 supplies the calculated second synthesis coefficient to the second synthesis coefficient modulating unit 153.

Specifically, if a threshold value at which synthesis (blending) of the linear signal LIN3 for the synthesis signal BLD1 is started is indicated by BLD_TH_H_LOW, a synthesis rate (blending ratio) is 1.0, and a threshold value at which the linear signal LIN3 is 100% is indicated by BLD_TH_H_HIGH, the second synthesis coefficient is obtained from the following Formula (40). Here, however, the signal is clipped in a range of 0 to 1.0.

$$\text{Second synthesis coefficient} = (\text{T2} - \text{BLD\_TH\_H\_LOW}) \div (\text{BLD\_TH\_H\_HIGH}$$
$$- \text{BLD\_TH\_H\_LOW}) \ ...(40)$$

The second motion detecting unit 152 defines a difference between the linear signal LIN2 from the second linearization processing unit 144 and the linear signal LIN3 from the third linearization processing unit 146 as a motion amount and performs motion determination. At this time, in order to distinguish noise of a signal and blinking of the high-speed blinking body such as the LED, the second motion detecting unit 152 compares the motion amount with a noise amount expected from a sensor characteristic, and calculates a second motion coefficient. The second motion detecting unit 152 supplies the calculated second motion coefficient to the second synthesis coefficient modulating unit 153.

Specifically, if an upper limit value of a level determined not to be 100% motion with respect to the difference is indicated by MDET_TH_LOW, and a level determined to be 100% motion is indicated by MDET TH HIGH, the second motion coefficient is obtained by the following Formula (41). Here, however, the signal is clipped in a range of 0 to 1.0.

$$\text{Second motion coefficient} = \{\text{ABS}(\text{LIN2} - \text{LIN3}) \div \text{normalization gain}$$
$$- \text{MDET\_TH\_LOW}\} \div (\text{MDET\_TH\_HIGH} - \text{MDET\_TH\_LOW}) \ ...(41)$$

However, a normalization gain of Formula (41) is obtained by the following Formula (42).

$$\text{Normalization gain} = 1 + \{G1 \times G2 \div (1 + G2)\} \ ...(42)$$

The second synthesis coefficient modulating unit 153 performs modulation in which the second motion coefficient from the second motion detecting unit 152 is added to the second synthesis coefficient from the second synthesis coefficient calculating unit 151, and calculates the second post motion compensation synthesis coefficient. The second synthesis coefficient modulating unit 153 supplies the calculated second post motion compensation synthesis coefficient to the second synthesis processing unit 154.

Specifically, the second post motion compensation synthesis coefficient is obtained by the following Formula (43). Here, however, the signal is clipped in a range of 0 to 1.0.

$$\text{Second post motion compensation synthesis coefficient} = \text{second}$$
$$\text{synthesis coefficient} - \text{second motion coefficient} \ ...(43)$$

The second synthesis processing unit 154 synthesizes (alpha blends) the synthesis signal BLD1 from the first synthesis processing unit 150 and the linear signal LIN3 from the third linearization processing unit 146 using the second motion compensation synthesis coefficient from the second synthesis coefficient modulating unit 153, and outputs a synthesized image signal serving as a HDR-synthesized signal obtained as a result.

Specifically, the synthesized image signal is obtained by the following Formula (44).

$$\text{Synthesized image signal} = (\text{LIN3} - \text{BLD1}) \times \text{second post motion}$$
$$\text{compensation synthesis coefficient} + \text{BLD1} \ ...(44)$$

The signal processing unit 104 in Fig. 21 is configured as described above.

(Signal processing in case where triple synthesis is performed)

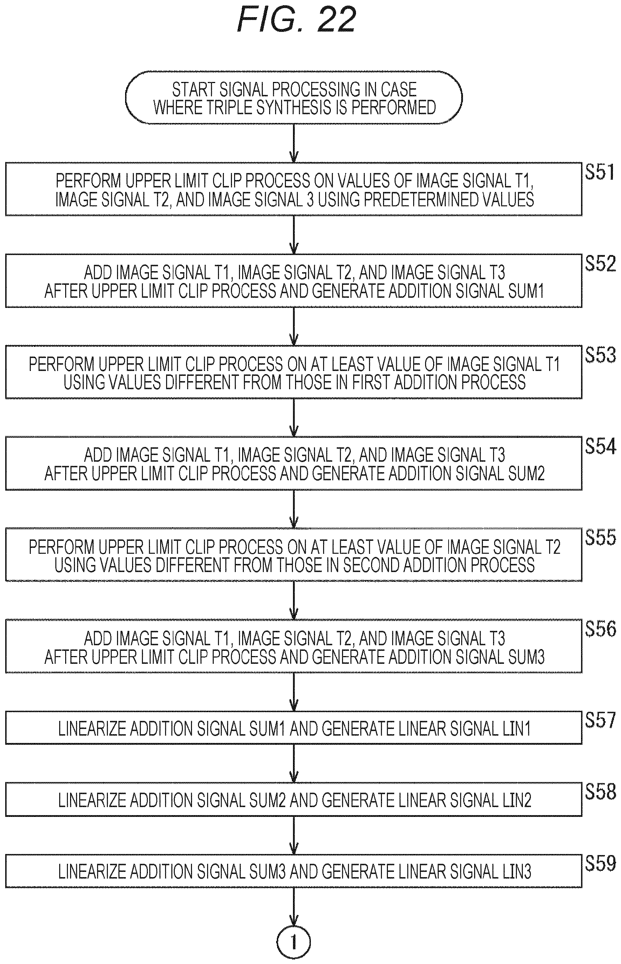

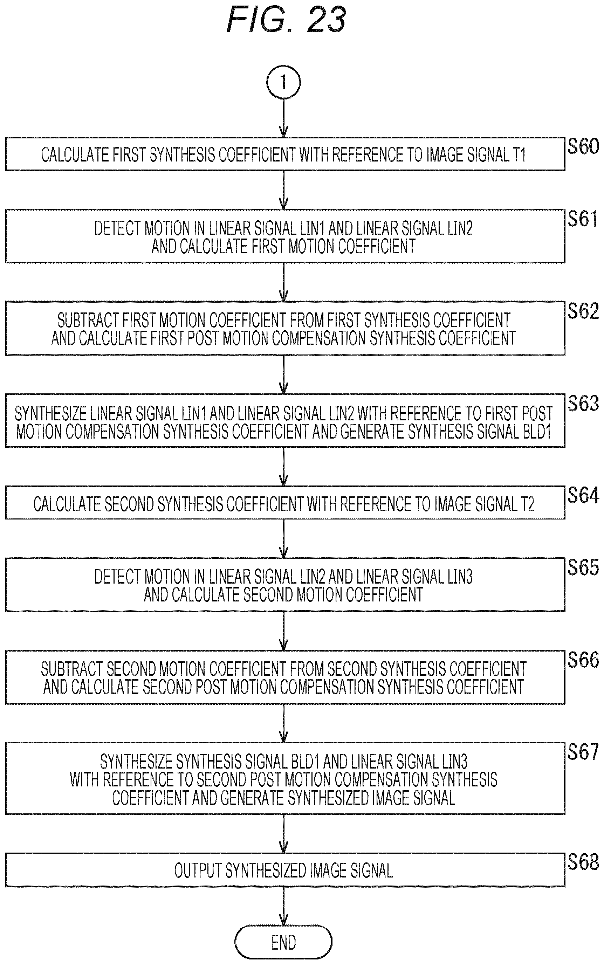

Next, a flow of signal processing in a case where the triple synthesis is executed by the signal processing unit 104 of Fig. 21 will be described with reference to the flowcharts of Fig. 22 and Fig. 23.

In step S51, the first addition processing unit 141 performs the upper limit clip process on the values of the image signal T1, the image signal T2, and the image signal T3 using predetermined clip values (CLIP_T1_1, CLIP_T2_1, CLIP_T3_1).

In step S52, the first addition processing unit 141 adds the image signal T1, the image signal T2, and the image signal T3 after the upper limit clip process obtained in the process of step S51 by calculating Formula (18), and generates the addition signal SUM1.

In step S53, the second addition processing unit 143 performs the upper limit clip process on at least the value of the image signal T1 using the clip values (CLIP T1 2, CLIP_T2_2, CLIP_T3_2) different from those in the first addition process (S51 and S52).

In step S54, the second addition processing unit 143 adds the image signal T1, the image signal T2, and the image signal T3 after the upper limit clip process obtained in the process of step S53 by calculating Formula (24), and generates the addition signal SUM2.

In step S55, the third addition processing unit 145 performs the upper limit clip process using the clip values (CLIP T1 3, CLIP_T2_3, CLIP_T3_3) different from those in the second addition process (S53 and S54) for at least the value of the image signal T2.

In step S56, the third addition processing unit 145 adds the image signal T1, the image signal T2, and the image signal T3 after the upper limit clip process obtained in the process of step S55 by calculating Formula (30), and generates the addition signal SUM3.

Further, the exposure time ratio of T1, T2, and T3 can be, for example, a ratio of T1 : T2 : T3 = 4 : 2 : 1. Therefore, the image signal T1 can be regarded as the long period exposure image (long-accumulated image), the image signal T2 can be regarded as the intermediate period exposure image (intermediate-accumulated image), and the image signal T3 can be regarded as the short period exposure image (short-accumulated image).

Further, for example, as the clip value set for the image signal T1 which is the long-accumulated image, the clip value (CLIP_T1_2) used in the second addition process (S53 and S54) can be made smaller than the clip value (CLIP T1_1) used in the first addition process (S51 and S52). Further, as the clip value set for the image signal T2 which is the intermediate-accumulated image, for example, the clip value (CLIP T2 3) used in the third addition process (S55 and S56) can be made smaller than the clip value (CLIP_T2_2) used in the second addition process (S53 and S54).

In step S57, the first linearization processing unit 142 linearizes the addition signal SUM1 obtained in the process of step S52 by calculating Formulas (19) to (23), and generates the linear signal LIN1.

In step S58, the second linearization processing unit 144 linearizes the addition signal SUM2 obtained by the processing of step S54 by calculating Formulas (25) to (29), and generates the linear signal LIN2.

In step S59, the third linearization processing unit 146 linearizes the addition signal SUM3 obtained in the process of step S56 by calculating Formulas (31) to (35), and generates the linear signal LIN3.

In step S60, the first synthesis coefficient calculating unit 147 calculates the first synthesis coefficient by calculating Formula (36) with reference to the image signal T1.

In step S61, the first motion detecting unit 148 detects a motion in the linear signal LIN1 obtained in the process of step S57 and the linear signal LIN2 obtained in the process of step S58, and calculates the first motion coefficient by calculating Formula (37).

In step S62, the first synthesis coefficient modulating unit 149 subtracts the first motion coefficient obtained in the process of step S61 from the first synthesis coefficient obtained in the process of step S60 by calculating Formula (38), and calculates the first post motion compensation synthesis coefficient.

In step S63, the first synthesis processing unit 150 synthesizes the linear signal LIN1 obtained in the process of step S57 and the linear signal LIN2 obtained in the process of step S58 by calculating Formula (39) with reference to the first post motion compensation synthesis coefficient obtained in the process of step S62, and generates the synthesis signal BLD1.

Further, although the synthesis process of the linear signal LIN1 and the linear signal LIN2 will be described later in detail with reference to Figs. 24 to 27, here, since the synthesis corresponding to the first post motion compensation synthesis coefficient is performed, the linear signal LIN1 and the linear signal LIN2 are synthesized while avoiding the periphery of the knee point Kp at which the histogram spike occurs.

In step S64, the second synthesis coefficient calculating unit 151 calculates the second synthesis coefficient by calculating Formula (40) with reference to the image signal T2.

In step S65, the second motion detecting unit 152 detects a motion in the linear signal LIN2 obtained in the process of step S58 and the linear signal LIN3 obtained in the process of step S59, and calculates the second motion coefficient by calculating Formulas (41) and (42).

In step S66, the second synthesis coefficient modulating unit 153 subtracts the second motion coefficient obtained in the process of step S65 from the second synthesis coefficient obtained in the process of step S64 by calculating Formula (43), and calculates the second post motion compensation synthesis coefficient.

In step S67, the second synthesis processing unit 154 synthesizes the synthesis signal BLD1 obtained in the process of step S63 and the linear signal LIN3 obtained in the process of step S59 by calculating Formula (44) with reference to the second post motion compensation synthesis coefficient obtained in the process of step S66, and generates the synthesized image signal.

Further, although the synthesis process of the linear signal LIN1 and the linear signal LIN2 will be described later in detail with reference to Figs. 24 to 27, here, since the synthesis corresponding to the post motion compensation synthesis coefficient is performed, the synthesis signal BLD1 and the linear signal LIN3 are synthesized while avoiding the periphery of the knee point Kp at which the histogram spike occurs.

In step S68, the second synthesis processing unit 154 outputs the synthesized image signal obtained in the process of step S67.

The flow of the signal processing in a case where the triple synthesis is performed has been described above.

<4. Detailed content of signal processing of present technology>

Next, detailed content of the signal processing performed by the signal processing unit 104 will be described with reference to Figs. 24 to 27. Further, here, the signal processing in a case where the triple synthesis is executed by the signal processing unit 104 of Fig. 21 will be described as an example.

(First addition process and first linearization process)

Fig. 24 is a diagram for describing the first addition process by the first addition processing unit 141 and the first linearization process by the first linearization processing unit 142 in detail.

In the first addition process, the clip process using a predetermined clip value is performed, and the clip values CLIP_T1_1, CLIP T2 1, and CLIP_T3_1 are set for the image signals T1, T2, and T3, respectively. In Fig. 24, the clip value of the image signal T1 is indicated by CLIP T1 1. Further, the clip value of the image signal T2 is indicated by CLIP T2 1, and the clip value of the image signal T3 is indicated by CLIP T3 1.

Further, in the first addition process, the image signals T1, T2, and T3 of the long accumulation, the intermediate accumulation, and the short accumulation are clipped using the independent clip values (CLIP_T1_1, CLIP_T2_1, CLIP_T3_1) by Formula (18) and added to obtain the addition signal SUM1.

Next, in the first linearization process, as the point at which the slope of the addition signal SUM1 changes, the positions of the knee points Kp (KP1_1 and KP2_1 of Fig. 24) is obtained by Formulas (19) and (20). Further, in the first linearization process, the linear signal LIN1 which is a linear signal (linearly restored signal) with respect to brightness is generated for each region of the first to third regions with reference to the value of the addition signal SUM1.

Specifically, as illustrated in Fig. 24, the first region (SUM1 < KP1_1) in which the image signal T1 (long accumulation) is the saturation level or less is a region in which the signal amounts of all of the image signal T1 (long accumulation), the image signal T2 (intermediate accumulation), and the image signal T3 (short accumulation) linearly change with respect to the light quantity.

Therefore, in the first linearization process, the addition signal SUM1 is used as the linear signal LIN1. In other words, in this first region, the linear signal LIN1 is obtained by Formula (21).

Further, as illustrated in Fig. 24, the second region (KP1 1 ≤ SUM1 < KP2_1) in which the image signal T2 (intermediate accumulation) is the saturation level or less is a region in which the image signal T1 (long accumulation) is clipped, and the signal amount thereof does not change although the light quantity changes, but the signal amounts of the image signal T2 (intermediate accumulation) and the image signal T3 (short accumulation) linearly change with respect to the light quantity.

Therefore, in the first linearization process, a value obtained by adding the values of the image signal T1 (long accumulation) estimated from the values of the image signal T2 (intermediate accumulation) and the image signal T3 (short accumulation) is used as the linear signal LIN1. In other words, in the second region, the linear signal LIN1 is obtained by Formula (22) .

Further, as illustrated in Fig. 24, the third region (KP2_1 ≤ SUM1) in which the image signal T2 (intermediate accumulation) exceeds the saturation level is a region in which the image signal T1 (long accumulation) and the image signal T2 (intermediate accumulation) are clipped, and the signal amounts thereof do not change although the light quantity changes, but the signal amount of the image signal T3 (short accumulation) linearly changes with respect to the light quantity.

Therefore, in the first linearization process, a value obtained by adding the values of the image signal T1 (long accumulation) and the image signal T2 (intermediate accumulation) estimated from the value of the image signal T3 (short accumulation) is used as the linear signal LIN1. In other words, in the third region, the linear signal LIN1 is obtained by Formula (23) .

As described above, in the first linearization process, the linear signal LIN1 which is a linear signal with respect to brightness is generated with reference to the addition signal SUM1 obtained by the first addition process.

(Second addition process and second linearization process)

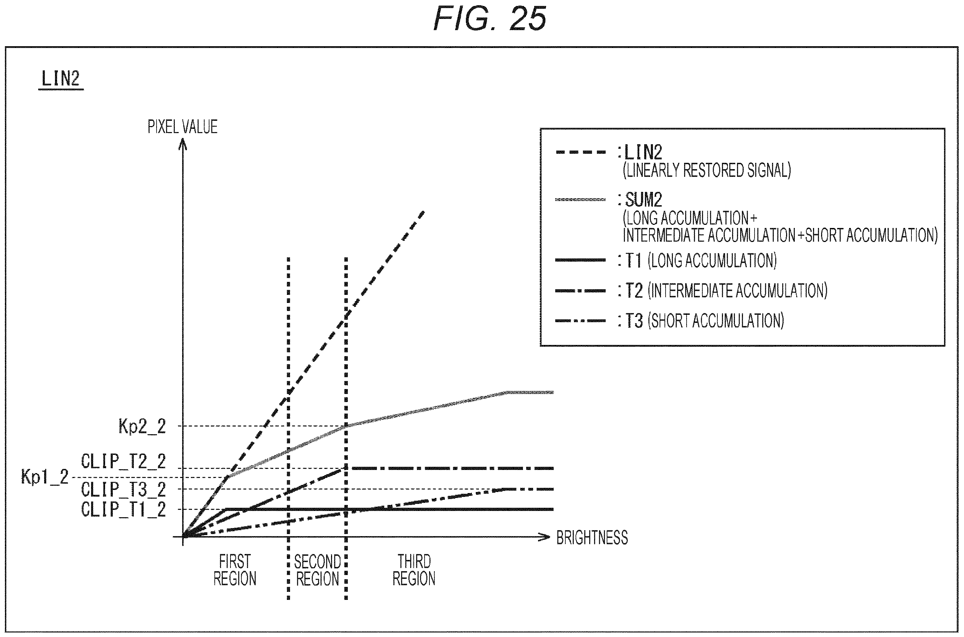

Fig. 25 is a diagram for describing the second addition process by the second addition processing unit 143 and the second linearization process by the second linearization processing unit 144 in detail.

In the second addition process, the clip process using a predetermined clip value is performed, and the clip values CLIP_T1_2, CLIP T2 2, and CLIP_T3_2 are set for the image signals T1, T2, and T3, respectively. In Fig. 25, the clip value of the image signal T1 is indicated by CLIP_T1_2. Further, the clip value of the image signal T2 is indicated by CLIP T2 2, and the clip value of the image signal T3 is indicated by CLIP_T3_2.

Further, in Fig. 25, in the clip values set for the respective image signals, as compared with the clip values of Fig. 24, the clip values CLIP T2 2 and CLIP_T3_2 for the image signals T2 and T3 and the clip values CLIP_T2_1 and CLIP_T3_1 are the same values, but the value of the clip value CLIP_T1_2 and the value of the clip value CLIP_T1_1 are different.

In other words, if the second addition process (Fig. 25) is compared with the first addition process (Fig. 24), the clip value CLIP_T1_2 which is lower than the clip value CLIP_T1_1 is set as the clip value for the image signal T1 (long accumulation). Meanwhile, in the first addition process and the second addition process, the same value is set for the clip value of the image signal T2 (intermediate accumulation) and the image signal T3 (short accumulation).

Further, in the second addition process, the image signals T1, T2, and T3 of the long accumulation, the intermediate accumulation, and the short accumulation are clipped using the independent clip values (CLIP_T1_2, CLIP_T2_2, CLIP_T3_2) by Formula (24) and added to obtain the addition signal SUM2.

Next, in the second linearization process, as the point at which the slope of the addition signal SUM2 changes, the positions of the knee points Kp (KP1_2 and KP2_2 of Fig. 25) are obtained by Formulas (25) and (26). Further, in the second linearization process, the linear signal LIN2 which is a linear signal (linearly restored signal) with respect to brightness is generated for each region of the first to third regions with reference to the value of the addition signal SUM2.

Specifically, as illustrated in Fig. 25, the first region (SUM2 < KP1_2) in which the image signal T1 (long accumulation) is the saturation level or less is a region in which the signal amounts of all of the image signal T1 (long accumulation), the image signal T2 (intermediate accumulation), and the image signal T3 (short accumulation) linearly change with respect to the light quantity.

Therefore, in the second linearization process, the addition signal SUM2 is used as the linear signal LIN2. In other words, in this first region, the linear signal LIN2 is obtained by Formula (27).

Further, as illustrated in Fig. 25, the second region (KP1_2 ≤ SUM2 < KP2_2) in which the image signal T2 (intermediate accumulation) is the saturation level or less is a region in which the image signal T1 (long accumulation) is clipped, and the signal amount thereof does not change although the light quantity changes, but the signal amounts of the image signal T2 (intermediate accumulation) and the image signal T3 (short accumulation) linearly change with respect to the light quantity.

Therefore, in the second linearization process, a value obtained by adding the values of the image signal T1 (long accumulation) estimated from the values of the image signal T2 (intermediate accumulation) and the image signal T3 (short accumulation) is used as the linear signal LIN2. In other words, in this second region, the linear signal LIN2 is obtained by Formula (28) .

Further, as illustrated in Fig. 25, the third region (KP2_2 ≤ SUM2) in which the image signal T2 (intermediate accumulation) exceeds the saturation level is a region in which the image signal T1 (long accumulation) and the image signal T2 (intermediate accumulation) are clipped, and the signal amounts thereof do not change although the light quantity changes, but the signal amount of the image signal T3 (short accumulation) linearly changes with respect to the light quantity.

Therefore, in the second linearization process, a value obtained by adding the values of the image signal T1 (long accumulation) and the image signal T2 (intermediate accumulation) estimated from the value of the image signal T3 (short accumulation) is used as the linear signal LIN2. In other words, in the third region, the linear signal LIN2 is obtained by Formula (29) .

As described above, in the second linearization process, the linear signal LIN2 which is a linear signal with respect to brightness is generated with reference to the addition signal SUM2 obtained by the second addition process.

Further, although not illustrated, in the third addition process by the third addition processing unit 145, similarly to the first addition process and the second addition process, the addition signal SUM3 is obtained by calculating Formula (30). Further, in the third linearization process by the third linearization processing unit 146, similarly to the first linearization process and the second linearization process, the knee point Kp (KP1_3, KP2_3) is obtained by Formulas (31) and (32), and the linear signal LIN3 is generated for each region of the first to third regions by Formulas (33) to (35).

(Suppression of histogram spike)

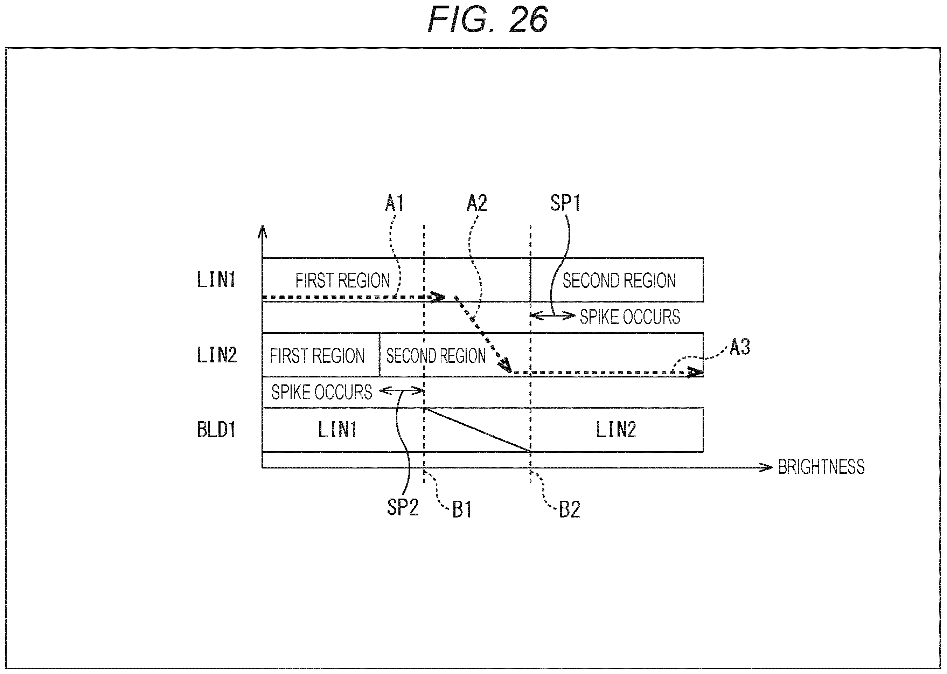

Fig. 26 is a diagram for describing suppression of the histogram spike according to the present technology.

Fig. 26 illustrates how the linear signal LIN1, the linear signal LIN2, and the synthesis signal BLD1 of the linear signals (LIN1, LIN2) are changed, and a horizontal axis indicates brightness.

In Fig. 26, a position of a signal in which the histogram spike occurs depends on a clip position of a signal before the addition signal SUM is generated (and knee point Kp obtained from it) . In this regard, in the present technology, in the second addition process, a clip value different from the clip value used in the first addition process is set, so that the linear signal LIN1 and the linear signal LIN2 in which the occurrence positions of the histogram spike are shifted are generated.

In the example of Fig. 26, since the clip values (CLIP T1 1 and CLIP_T1_2) set for the image signal T1 (long accumulation) are different between the linear signal LIN1 illustrated in Fig. 24 and the linear signal LIN2 illustrated in Fig. 25, the occurrence position of the histogram spike ("SP1" of LIN1 and "SP2" of LIN2) are shifted.

Further, in the present technology, as indicated by flows of dotted lines A1 to A3 in Fig. 26, the clip value in the linear signal LIN1 is lowered before the histogram spike ("SP1" of LIN1) occurs, and transfer to the linear signal LIN2 side which has already passed the knee point Kp is performed (dotted line A2 of Fig. 26), so that the synthesis signal BLD1 (blended signal) in which the occurrence of the histogram spike is suppressed is generated.

In other words, in Fig. 26, the clip value is lowered by the image signal T1 (long accumulation), a signal (linear signal LIN2) in which the position of the knee point Kp is lowered is prepared in parallel, and transfer from the linear signal LIN1 side (dotted line A1 in Fig. 26) to the linear signal LIN2 side (dotted line A3 in Fig. 26) is performed so that the periphery of the knee point Kp ("SP1" of LIN1 and "SP2" of LIN2) changing in accordance with the clip value is avoided.

Accordingly, an abrupt characteristic change in the knee point Kp is suppressed as illustrated in B of Fig. 18. As a result, it possible to suppress the occurrence of the histogram spike in the synthesis signal BLD1 obtained by synthesizing the linear signal LIN1 and the linear signal LIN2.

Further, although not illustrated in Fig. 26, when the synthesis signal BLD1 and the linear signal LIN3 are synthesized, similarly to the relation when the linear signal LIN1 and the linear signal LIN2 are synthesized, transfer from the synthesis signal BLD1 side to the linear signal LIN3 side is performed so that the periphery of the knee point Kp is avoided, and thus it is possible to suppress the histogram spike over the entire signal area.

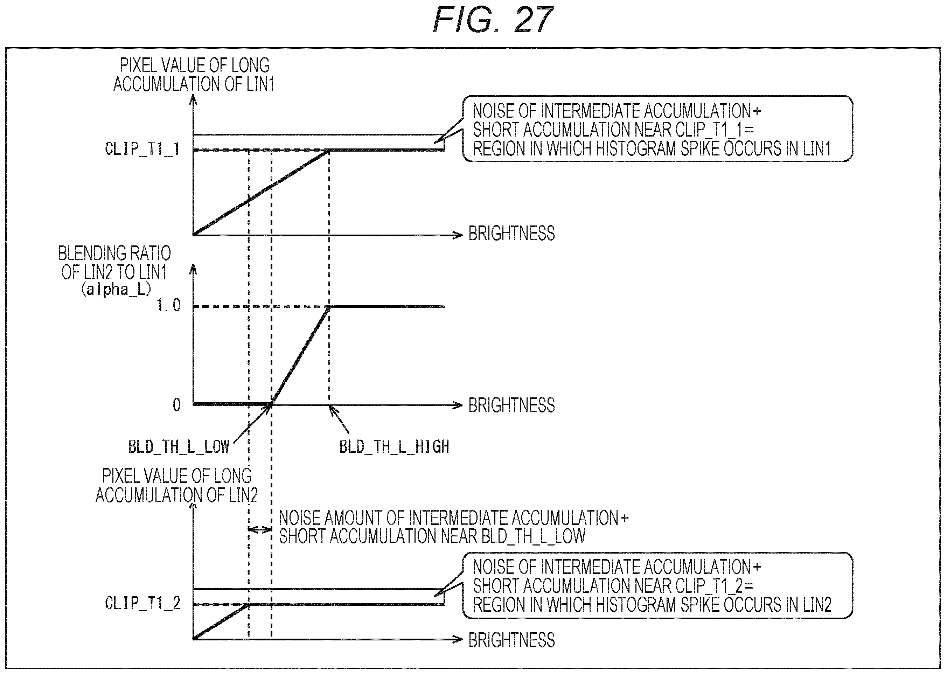

Further, in Fig. 26, regarding the synthesis signal BLD1, the synthesis rate of the linear signal LIN2 in the synthesis signal BLD1 obtained by synthesizing the linear signal LIN1 and the linear signal LIN2 in a range of dotted lines B1 to B2 changes from 0% to 100 % (the synthesis rate of the linear signal LIN1 changes from 100% to 0%), but the synthesis rate is decided by the first synthesis coefficient (first post motion compensation synthesis coefficient). Fig. 27 illustrates the synthesis coefficient in detail.

(Details of synthesis coefficient)

Fig. 27 is a diagram for describing the synthesis coefficient used in the present technology in detail.

Fig. 27 illustrates how the pixel value of the image signal T1 (long accumulation) of the linear signal LIN1, the synthesis rate (first synthesis coefficient) of the linear signal LIN2 to the linear signal LIN1, and the pixel value of the image signal T1 (long accumulation) of the linear signal LIN2 are changed, and a horizontal axis indicates brightness.

Here, in the linear signal LIN1, the histogram spike does not occur until the image signal T1 (long accumulation) is clipped with the clip value CLIP_T1_1, and the synthesis rate (first synthesis coefficient) of the linear signal LIN1 and the linear signal LIN2 is set while looking at the level of the image signal T1 (long accumulation).

Further, when the image signal T1 (long accumulation) becomes the clip value CLIP_T1_1, the first synthesis coefficient (BLD_TH_L_LOW, BLD_TH_L_HIGH) is set so that it is completely switched from the linear signal LIN1 side to the linear signal LIN2 side (the synthesis rate of the linear signal LIN2 becomes 100%). Here, a value to be set as a width of the synthesis region is arbitrary.

On the other hand, it is necessary for the linear signal LIN2 side to satisfy a condition that the histogram spike does not occur in the region of BLD_TH_L_LOW in which the synthesis (blending) of the linear signal LIN1 and the linear signal LIN2 is started. Therefore, in the present technology, a value obtained by lowering only noise amounts of the image signal T2 (intermediate accumulation) and the image signal T3 (short accumulation) in the vicinity of it from BLD_TH_L_LOW is set as the clip value CLIP_T1_2.

(Details of post motion compensation synthesis coefficient)

Next, the post motion compensation synthesis coefficient used in the present technology will be described in detail.

In the examples of Figs. 24 to 27 described above, since the lower value than the clip value (CLIP_T1_1) used in the first addition process is set as the clip value (CLIP T1 2) of the image signal T1 used in the second addition process, in the linear signal LIN2, the signal amount of the image signal T1 (long accumulation) is clipped earlier than in the linear signal LIN1.

At this time, in the linear signal LIN2, the reduced signal amount is estimated using the image signal T2 (intermediate accumulation) and the image signal T3 (short accumulation), but a moving object or the like shown brightly only in the image signal T1 (long accumulation) is likely to be darker than in the linear signal LIN1 in which a higher clip value is set.

Therefore, in the present technology, the motion determination is performed between the linear signal LIN1 and the linear signal LIN2, and in a case where there is amotion, the first synthesis coefficient is controlled (modulated) so that the synthesis rate of the safer (more reliable) linear signal LIN1 side is increased. Further, the synthesis of the linear signal LIN1 and the linear signal LIN2 is performed using the first post motion compensation synthesis coefficient obtained as described above, and thus it is possible to suppress, for example, a moving body or the like from becoming dark.

Further, for example, the image signal T1 (long accumulation) is used in the first addition process, whereas a mode in which the image signal T1 of the image signal T1 (long accumulation) is not used is assumed in the second addition process, but in the case of this mode, not the linear signal LIN2 but the linear signal LIN1 is more reliable information. In this case, the first synthesis coefficient is controlled such that the synthesis rate of the linear signal LIN1 side is increased.

Here, for example, the linear signal LIN1 and the linear signal LIN2 are compared, and if a difference is large, it is desirable to use the direction of the linear signal LIN1. In other words, when the linear signal LIN1 and the linear signal LIN2 are synthesized, the first synthesis coefficient is modulated such that the synthesis rate of the signal with more reliable information is increased.

Further, although the first synthesis coefficient for synthesizing the linear signal LIN1 and the linear signal LIN2 and the first post motion compensation synthesis coefficient have been described here, the second synthesis coefficient for synthesizing the synthesis signal BLD1 and the linear signal LIN3 and the second post motion compensation synthesis coefficient can be similarly controlled.

<5. Calculation formula of N-times synthesis>

In the above description, the signal processing in a case where the dual synthesis is performed and the signal processing in a case where the triple synthesis is performed has been described, but the number of syntheses is an example, and four or more syntheses can be performed as well. In other words, the signal processing to which the present technology is applied can be performed on N captured images (N is an integer of 1 or more) input to the signal processing unit 104.

Here, in a case where the N captured images are input to the signal processing unit 104, the captured images are indicated by T1, T2, T3, ..., TN in order from an image signal having high sensitivity. For example, in a case where the triple synthesis is performed, the image signal T1 corresponds to the long-accumulated image. Further, the image signal T2 corresponds to the intermediate-accumulated image, and the image signal T3 corresponds to the short-accumulated image.

Further, as the exposure time, the exposure time of the image signal T1 is indicated by S1, the exposure time of the image signal T2 is indicated by S2, and the exposure time of the image signal T3 is indicated by S3. If the exposure time is similarly designated for the image signal T4 and subsequent image signals, the exposure time of the image signal TN is indicated by SN.

Further, as the value of the clip value before the addition process, the clip value of the image signal T1 is indicated by CLIP T1, the clip value of the image signal T2 is indicated by CLIP_T2, and the clip value of the image signal T3 is indicated by CLIP T3. If the clip value is similarly designated for the image signal T4 and subsequent image signals, the clip value of the image signal TN is indicated by CLIP TN.

Further, as the knee point Kp, a point at which the image signal T1 is saturated, and the slope of the addition signal SUM changes initially is indicated by KP_1, and then a point at which the image signal T2 is saturated, and the slope of the addition signal SUM changes is indicated by KP_2. If it is similarly applied to the image signal T3 and subsequent image signals, points at which the image signals T3, ..., TN are saturated, and the slope of the addition signal SUM changes are indicated by KP_3, ..., KP_N in order.

Further, as the linear signal LIN after the linearization, the linear signal of the region of SUM < KP_1 is indicated by LIN_1, the linear signal of the region of KP_1 ≤ SUM < KP_2 is indicated by LIN_2, and the linear signal of the region of KP_2 ≤ SUM < KP_3 is indicated by LIN_3. If a similar relation is applied to subsequent linear signals, the linear signal of the region of KP_N-1 < SUM is indicated by LIN_N.

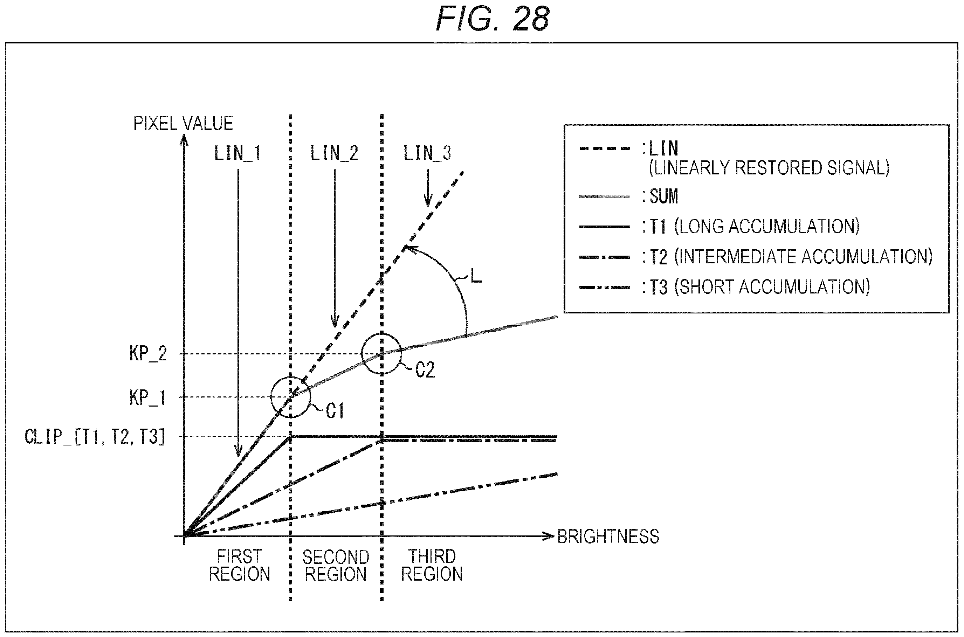

Such a relation can be illustrated, for example, as illustrated in Fig. 28.

In Fig. 28, the clip values CLIP_T1, CLIP_T2, and CLIP_T3 are set for the image signals T1, T2, and T3 on which the addition process is performed. Here, it is the addition signal SUM of the image signals T1, T2, and T3, but a slope thereof is changed at the knee point KP 1 corresponding to the clip value CLIP_T1 of the image signal T1 (a first change in C1 in Fig. 28), and the slope thereof is further changed at the knee point KP 2 corresponding to the clip value CLIP_T2 of the image signal T2 (a second change in C2 in Fig. 28).

In this case, as indicated by L in Fig. 28, the addition signal SUM of the image signals T1, T2, and T3 is linearized, but the linear signal LIN_1 is restored in the first region of SUM < KP_1, the linear signal LIN_2 is restored in the second region of KP 1 ≤ SUM < KP 2, and the linear signal LIN_3 is restored in the third region of KP_2 ≤ SUM.

Further, in Fig. 28, in order to simplify the description, the example in which the image signals on which the addition process is performed are the three image signals T1, T2, and T3, that is, the example in which the triple synthesis is performed is illustrated, but the image signal T4 and the subsequent image signals are processed similarly, and the linear signal is restored from the addition signal SUM in accordance with the knee point Kp.

In the case of having such a relation, a calculation formula that converts the addition signal SUM into the linear signal LIN can be indicated by the following Formulas (45) and (46). Further, the following Formula (45) is a calculation formula for calculating the addition signal SUM.

[Math. 1]

$$SUM = \sum_{n=1}^{N} MIN(CLIP\_Tn, \ Tn)$$

$$\ldots (45)$$

For example, in the case of N = 2, that is, in the case of the dual synthesis, as indicated in Formula (6) or (10), the addition value of the signal obtained by clipping the image signal T1 with the clip value CLIP_T1 and the signal obtained by clipping the image signal T2 with the clip value CLIP_T2 is used as the addition signal SUM.

Then, as described above, if the linear signal LIN of the region of KP_m-1 ≤ SUM < KP-m is defined as LIN-m as the linear signal LIN, LIN_m can be indicated by the following Formula (46) for 1 ≤ m < N.

[Math. 2]

$$\mathrm{LIN\_m} = \left( \mathrm{SUM} - \sum_{n=0}^{m=1} \mathrm{CLIP_{Tn}} \right) \times \frac{\sum_{p=1}^{N} \mathrm{Sp}}{\sum_{q=m}^{N} \mathrm{Sq}}$$

... (46)

Here, in Formula (46), SUM corresponds to Formula (45). Further, in Formula (46), the clip value CLIP_T0 = 0.

Further, as a general solution of the knee point Kp, the position of KP_m can be indicated by Formula (47) for 1 ≤ m < N.

[Math. 3]

$$\mathrm{KP_m} = \sum_{n=0}^{m=1} \mathrm{CLIP_{Tn}} + \mathrm{CLIP_{Tm}} \times \frac{\sum_{p=m}^{N} \mathrm{Sp}}{\mathrm{Sm}}$$

... (47)

Here, in Formula (47), the knee point KP_0 = 0, and the clip value CLIP_T0 = 0.

As described above, according to the present technology, it is possible to recognize a traffic signal, a road sign, and the like of an LED with a high blinking response speed reliably in a situation in which a luminance difference is very large such as an exit of a tunnel and recognize an obstacle such as a preceding vehicle or a pedestrian accurately.

Further, in the present technology, when the suppression of the histogram spike described above is performed, since a reduced amount of the signal amount of the long accumulation is estimated from the intermediate accumulation and the short accumulation, a moving body or the like shown brightly only in the long accumulation is likely to become darker as compared with simple addition is performed. In this regard, in the present technology, the motion correction process is performed together.

Further, the present technology can be applied to all imaging devices such as in-vehicle camera and surveillance camera. Further, the photographing target is not limited to an LED traffic signal and an LED speed limit sign, and an object in which the luminance difference is very large, a blinking object (for example, a light emitting body blinking at a high speed), or the like can be the photographing target. Further, the present technology is a useful technology especially in an imaging device that detects an obstacle using a histogram.

<6. Configuration example of solid state imaging device>

The camera unit 10 illustrated in Fig. 13 can be configured as a stacked solid state imaging device such as, for example, a backside-illumination CMOS image sensor.

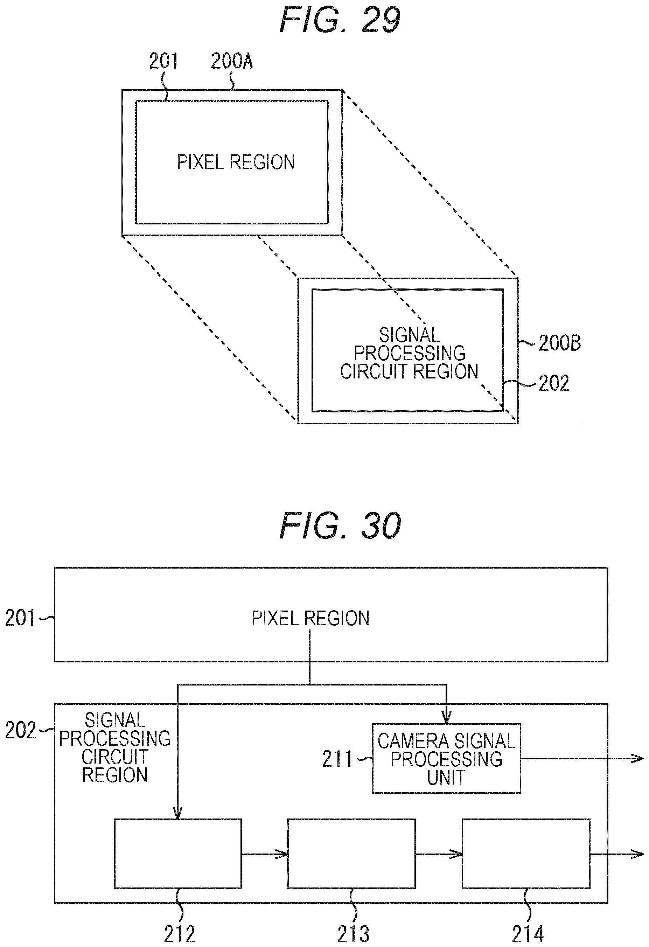

Specifically, as illustrated in Fig. 29, it can be configured such that a semiconductor substrate 200A including a pixel region 201 formed thereon and a semiconductor substrate 200B including a signal processing circuit region 202 formed thereon are stacked. Further, in Fig. 29, the semiconductor substrate 200A and the semiconductor substrate 200B are electrically connected, for example, through a through via, a metal bond, or the like.

Fig. 30 illustrates a detailed configuration of the pixel region 201 and the signal processing circuit region 202 of Fig. 29. In Fig. 30, the signal processing circuit region 202 includes a camera signal processing unit 211, signal processing units 212 to 214 that perform various kinds of signal processing, and the like.

Here, the camera signal processing unit 211 can include the signal processing unit 104 (Fig. 13). In other words, the camera signal processing unit 211 can perform the signal processing described above with reference to the flowcharts of Fig. 17 and Figs. 22 to 23. Further, the camera signal processing unit 211 may include a delay line 103, a timing control unit 106, and the like. Further, the pixel region 201 includes a pixel array portion of the imaging element 102 and the like.

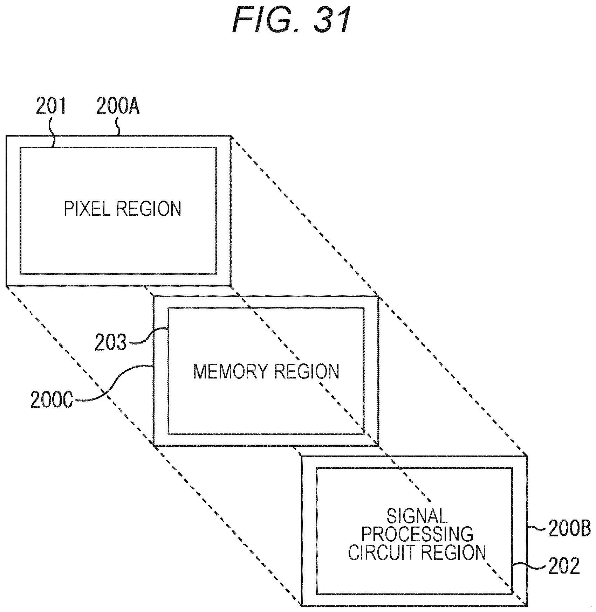

Further, a semiconductor substrate 200C including a memory region 203 formed thereon may be stacked between a semiconductor substrate 200A including a pixel region 201 formed thereon and a semiconductor substrate 200B including a signal processing circuit region 202 formed thereon as illustrated in Fig. 31.

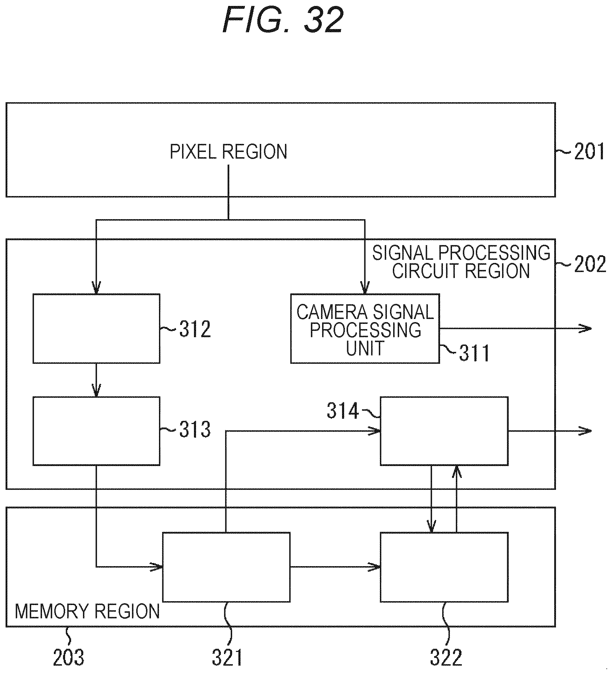

Fig. 32 illustrates a detailed configuration of the pixel region 201, the signal processing circuit region 202, and the memory region 203 in Fig. 31. In Fig. 32, the signal processing circuit region 202 includes a camera signal processing unit 311, signal processing units 312 to 314 that perform various kinds of signal processing, and the like. Further, the memory region 203 includes memory units 321 to 322 and the like.

Here, similarly to the camera signal processing unit 211 of Fig. 30, the camera signal processing unit 311 includes the signal processing unit 104 (Fig. 13) and the like. Further, the delay line 103 may be included in the memory region 203, and the delay line 103 may sequentially store image data from the pixel region 201 (the imaging element 102) and appropriately supply the image data to the camera signal processing unit 311 (the signal processing unit 104).

<7. Configuration example of computer>

A series of processes described above (for example, the signal processing illustrated in Fig. 17 and Figs. 22 to 23) can be executed by hardware or software. In a case where a series of processes is executed by software, a program constituting the software is installed in the computer. Here, examples of the computer include a computer incorporated in dedicated hardware, a general-purpose personal computer which has various kinds of program installed therein and is capable of executing various kinds of functions, and the like.

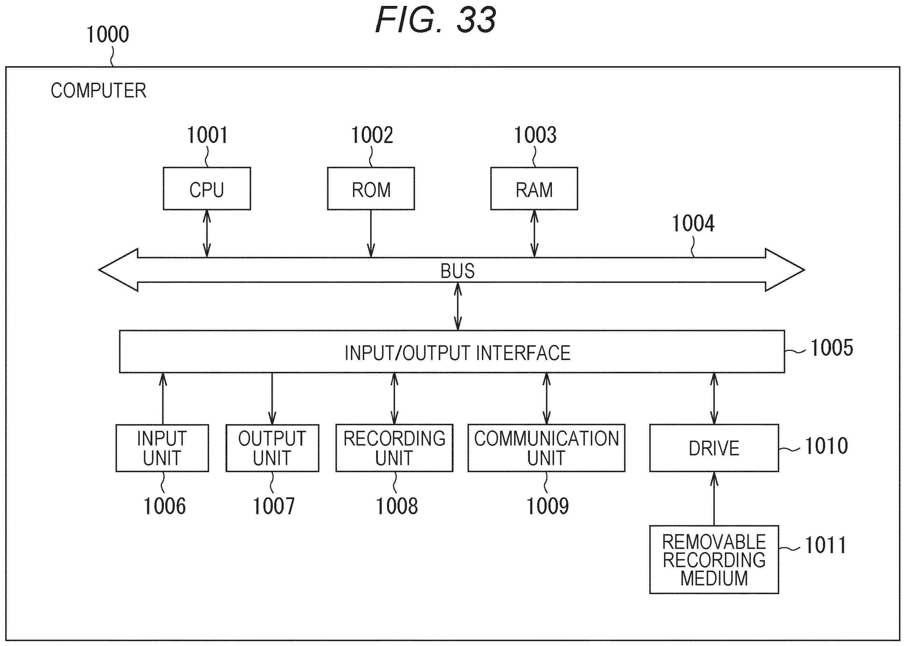

Fig. 33 is a block diagram illustrating a hardware configuration example of the computer that executes a series of processes described above through a program.

In a computer 1000, a central processing unit (CPU) 1001, a read only memory (ROM) 1002, and a random access memory (RAM) 1003 are connected to one another via a bus 1004. Further, an input/output interface 1005 is connected to the bus 1004. An input unit 1006, an output unit 1007, a recording unit 1008, a communication unit 1009, and a drive 1010 are connected to the input/output interface 1005.

The input unit 1006 includes a keyboard, a mouse, a microphone, or the like. The output unit 1007 includes a display, a speaker, or the like. The recording unit 1008 includes a hard disk, a non-volatile memory, or the like. The communication unit 1009 includes a network interface or the like. The drive 1010 drives a removable recording medium 1011 such as a magnetic disk, an optical disk, a magneto-optical disk, or a semiconductor memory.

In the computer 1000 configured as described above, when the CPU 1001 loads, for example, the program stored in the recording unit 1008 onto the RAM 1003 via the input/output interface 1005 and the bus 1004 and executes the programs, a series of processes is performed.

The program executed by the computer 1000 (the CPU 1001) can be provided in a form in which it is recorded in, for example, the removable recording medium 1011 serving as a package medium. Further, the program can be provided via a wired or wireless transmission medium such as a local area network, the Internet, digital satellite broadcasting, or the like.

In computer 1000, the program can be installed in the recording unit 1008 via the input/output interface 1005 as the removable recording medium 1011 is loaded into the drive 1010. Further, the program can be received through the communication unit 1009 via a wired or wireless transmission medium and installed in the recording unit 1008. Further, the program can be installed in the ROM 1002 or the recording unit 1008 in advance.

Further, the program executed by the computer 1000 may be a program that is processed in chronological order in accordance with the order described in this specification, or may be executed in parallel, at a necessary timing such as in a case where a call is made.

Here, in this specification, the process steps for describing the program causing the computer 1000 to perform various kinds of processes need not be necessarily processed chronologically in accordance with the order described as the flowchart and may be executed in parallel or individually as well (for example, a parallel process or an object-based process).

Further, the program may be processed by a single computer or may be shared and processed by a plurality of computers. Further, the program may be transferred to a computer at a remote site and executed.

Further, in this specification, a system means a set of a plurality of components (apparatuses, modules (parts), or the like), and it does not matter whether or not all the components are in a same housing. Therefore, a plurality of apparatuses which are accommodated in separate housings and connected via a network and a single apparatus in which a plurality of modules are accommodated in a single housing are both systems.

Further, the embodiment of the present technology is not limited to the above-described embodiment, and various modifications can be made without departing from the gist of the present technology. For example, the present technology can take a configuration of cloud computing in which one function is shared and processed by a plurality of apparatuses via a network.

<3. Application Example>

The technology according to the present disclosure can be applied to various products. For example, the technology according to the present disclosure is implemented as apparatuses mounted on any type of mobile bodies such as automobiles, electric vehicles, hybrid electric vehicles, motorcycles, bicycles, personal mobilities, airplanes, drones, ships, robots, construction machines, and agricultural machines (tractors).

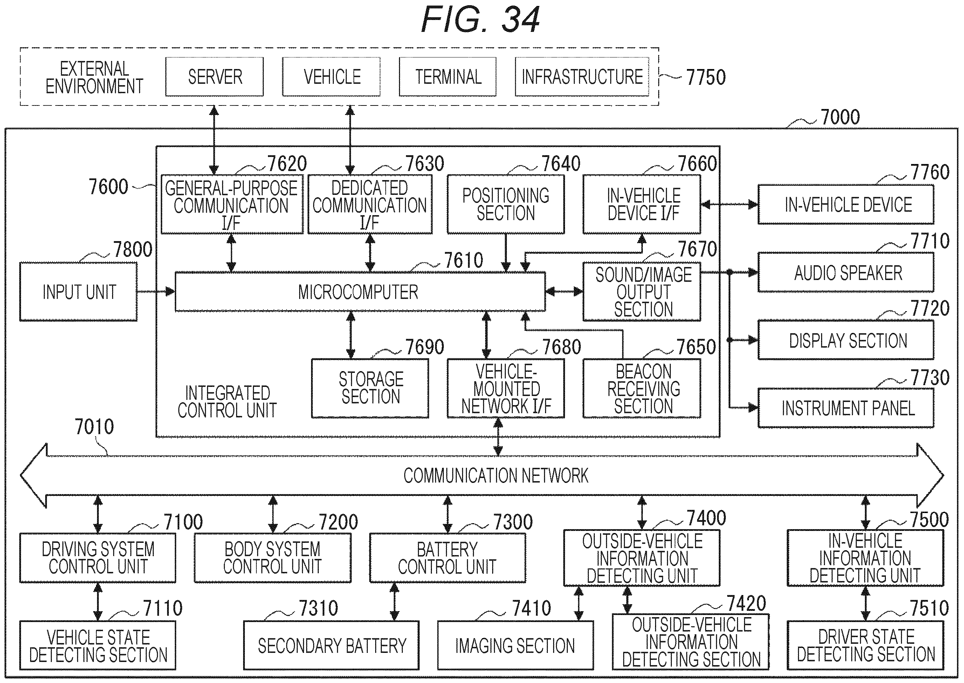

Fig. 34 is a block diagram depicting an example of schematic configuration of a vehicle control system 7000 as an example of a mobile body control system to which the technology according to an embodiment of the present disclosure can be applied. The vehicle control system 7000 includes a plurality of electronic control units connected to each other via a communication network 7010. In the example depicted in Fig. 34, the vehicle control system 7000 includes a driving system control unit 7100, a body system control unit 7200, a battery control unit 7300, an outside-vehicle information detecting unit 7400, an in-vehicle information detecting unit 7500, and an integrated control unit 7600. The communication network 7010 connecting the plurality of control units to each other may, for example, be a vehicle-mounted communication network compliant with an arbitrary standard such as controller area network (CAN), local interconnect network (LIN), local area network (LAN), FlexRay (registered trademark), or the like.

Each of the control units includes: a microcomputer that performs arithmetic processing according to various kinds of programs; a storage section that stores the programs executed by the microcomputer, parameters used for various kinds of operations, or the like; and a driving circuit that drives various kinds of control target devices. Each of the control units further includes: a network interface (I/F) for performing communication with other control units via the communication network 7010; and a communication I/F for performing communication with a device, a sensor, or the like within and without the vehicle by wire communication or radio communication. A functional configuration of the integrated control unit 7600 illustrated in Fig. 34 includes a microcomputer 7610, a general-purpose communication I/F 7620, a dedicated communication I/F 7630, a positioning section 7640, a beacon receiving section 7650, an in-vehicle device I/F 7660, a sound/image output section 7670, a vehicle-mounted network I/F 7680, and a storage section 7690. The other control units similarly include a microcomputer, a communication I/F, a storage section, and the like.

The driving system control unit 7100 controls the operation of devices related to the driving system of the vehicle in accordance with various kinds of programs. For example, the driving system control unit 7100 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like. The driving system control unit 7100 may have a function as a control device of an antilock brake system (ABS), electronic stability control (ESC), or the like.

The driving system control unit 7100 is connected with a vehicle state detecting section 7110. The vehicle state detecting section 7110, for example, includes at least one of a gyro sensor that detects the angular velocity of axial rotational movement of a vehicle body, an acceleration sensor that detects the acceleration of the vehicle, or sensors for detecting an amount of operation of an accelerator pedal, an amount of operation of a brake pedal, the steering angle of a steering wheel, an engine speed or the rotational speed of wheels, and the like. The driving system control unit 7100 performs arithmetic processing using a signal input from the vehicle state detecting section 7110, and controls the internal combustion engine, the driving motor, an electric power steering device, the brake device, and the like.

The body system control unit 7200 controls the operation of various kinds of devices provided to the vehicle body in accordance with various kinds of programs. For example, the body system control unit 7200 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 7200. The body system control unit 7200 receives these input radio waves or signals, and controls a door lock device, the power window device, the lamps, or the like of the vehicle.

The battery control unit 7300 controls a secondary battery 7310, which is a power supply source for the driving motor, in accordance with various kinds of programs. For example, the battery control unit 7300 is supplied with information about a battery temperature, a battery output voltage, an amount of charge remaining in the battery, or the like from a battery device including the secondary battery 7310. The battery control unit 7300 performs arithmetic processing using these signals, and performs control for regulating the temperature of the secondary battery 7310 or controls a cooling device provided to the battery device or the like.

The outside-vehicle information detecting unit 7400 detects information about the outside of the vehicle including the vehicle control system 7000. For example, the outside-vehicle information detecting unit 7400 is connected with at least one of an imaging section 7410 or an outside-vehicle information detecting section 7420. The imaging section 7410 includes at least one of a time-of-flight (ToF) camera, a stereo camera, a monocular camera, an infrared camera, or other cameras. The outside-vehicle information detecting section 7420, for example, includes at least one of an environmental sensor for detecting current atmospheric conditions or weather conditions or a peripheral information detecting sensor for detecting another vehicle, an obstacle, a pedestrian, or the like on the periphery of the vehicle including the vehicle control system 7000.

The environmental sensor, for example, may be at least one of a rain drop sensor detecting rain, a fog sensor detecting a fog, a sunshine sensor detecting a degree of sunshine, or a snow sensor detecting a snowfall. The peripheral information detecting sensor may be at least one of an ultrasonic sensor, a radar device, or a LIDAR device (light detection and ranging device, or laser imaging detection and ranging device) . Each of the imaging section 7410 and the outside-vehicle information detecting section 7420 may be provided as an independent sensor or device, or may be provided as a device in which a plurality of sensors or devices are integrated.

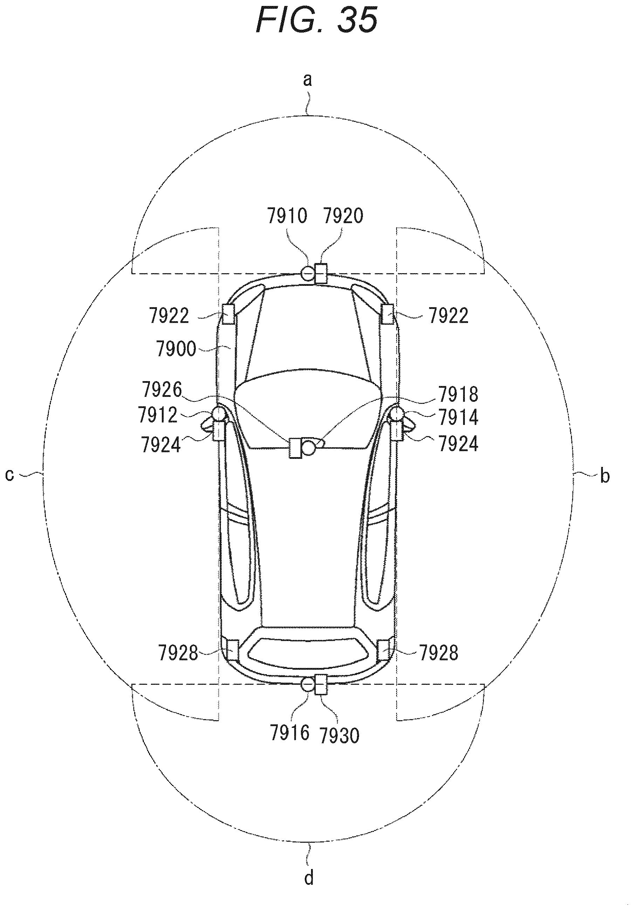

Fig. 35 depicts an example of installation positions of the imaging section 7410 and the outside-vehicle information detecting section 7420. Imaging sections 7910, 7912, 7914, 7916, and 7918 are, for example, disposed at least one of positions on a front nose, sideview mirrors, a rear bumper, and a back door of the vehicle 7900 and a position on an upper portion of a windshield within the interior of the vehicle. The imaging section 7910 provided to the front nose and the imaging section 7918 provided to the upper portion of the windshield within the interior of the vehicle obtain mainly an image of the front of the vehicle 7900. The imaging sections 7912 and 7914 provided to the sideview mirrors obtain mainly an image of the sides of the vehicle 7900. The imaging section 7916 provided to the rear bumper or the back door obtains mainly an image of the rear of the vehicle 7900. The imaging section 7918 provided to the upper portion of the windshield within the interior of the vehicle is used mainly to detect a preceding vehicle, a pedestrian, an obstacle, a signal, a traffic sign, a lane, or the like.

Incidentally, Fig. 35 depicts an example of photographing ranges of the respective imaging sections 7910, 7912, 7914, and 7916. An imaging range a represents the imaging range of the imaging section 7910 provided to the front nose. Imaging ranges band c respectively represent the imaging ranges of the imaging sections 7912 and 7914 provided to the sideview mirrors. An imaging range d represents the imaging range of the imaging section 7916 provided to the rear bumper or the back door. A bird's-eye image of the vehicle 7900 as viewed from above can be obtained by superimposing image data imaged by the imaging sections 7910, 7912, 7914, and 7916, for example.

Outside-vehicle information detecting sections 7920, 7922, 7924, 7926, 7928, and 7930 provided to the front, rear, sides, and corners of the vehicle 7900 and the upper portion of the windshield within the interior of the vehicle may be, for example, an ultrasonic sensor or a radar device. The outside-vehicle information detecting sections 7920, 7926, and 7930provided to the front nose of the vehicle 7900, the rear bumper, the back door of the vehicle 7900, and the upper portion of the windshield within the interior of the vehicle may be a LIDAR device, for example. These outside-vehicle information detecting sections 7920 to 7930 are used mainly to detect a preceding vehicle, a pedestrian, an obstacle, or the like.

Returning to Fig. 34, the description will be continued. The outside-vehicle information detecting unit 7400 makes the imaging section 7410 image an image of the outside of the vehicle, and receives imaged image data. Further, the outside-vehicle information detecting unit 7400 receives detection information from the outside-vehicle information detecting section 7420 connected to the outside-vehicle information detecting unit 7400. In a case where the outside-vehicle information detecting section 7420 is an ultrasonic sensor, a radar device, or a LIDAR device, the outside-vehicle information detecting unit 7400 transmits an ultrasonic wave, an electromagnetic wave, or the like, and receives information of a received reflected wave. On the basis of the received information, the outside-vehicle information detecting unit 7400 may perform processing of detecting an object such as a human, a vehicle, an obstacle, a sign, a character on a road surface, or the like, or processing of detecting a distance thereto. The outside-vehicle information detecting unit 7400 may perform environment recognition processing of recognizing a rainfall, a fog, road surface conditions, or the like on the basis of the received information. The outside-vehicle information detecting unit 7400 may calculate a distance to an object outside the vehicle on the basis of the received information.

Further, on the basis of the received image data, the outside-vehicle information detecting unit 7400 may perform image recognition processing of recognizing a human, a vehicle, an obstacle, a sign, a character on a road surface, or the like, or processing of detecting a distance thereto. The outside-vehicle information detecting unit 7400 may subject the received image data to processing such as distortion correction, alignment, or the like, and combine the image data imaged by a plurality of different imaging sections 7410 to generate a bird's-eye image or a panoramic image. The outside-vehicle information detecting unit 7400 may perform viewpoint conversion processing using the image data imaged by the imaging section 7410 including the different imaging parts.

The in-vehicle information detecting unit 7500 detects information about the inside of the vehicle. The in-vehicle information detecting unit 7500 is, for example, connected with a driver state detecting section 7510 that detects the state of a driver. The driver state detecting section 7510 may include a camera that images the driver, a biosensor that detects biological information of the driver, a microphone that collects sound within the interior of the vehicle, or the like. The biosensor is, for example, disposed in a seat surface, the steering wheel, or the like, and detects biological information of an occupant sitting in a seat or the driver holding the steering wheel. On the basis of detection information input from the driver state detecting section 7510, the in-vehicle information detecting unit 7500 may calculate a degree of fatigue of the driver or a degree of concentration of the driver, or may determine whether or not the driver is dozing. The in-vehicle information detecting unit 7500 may subject an audio signal obtained by the collection of the sound to processing such as noise canceling processing or the like.

The integrated control unit 7600 controls general operation within the vehicle control system 7000 in accordance with various kinds of programs . The integrated control unit 7600 is connected with an input section 7800. The input section 7800 is implemented by a device capable of input operation by an occupant, such, for example, as a touch panel, a button, a microphone, a switch, a lever, or the like. The integrated control unit 7600 may be supplied with data obtained by voice recognition of voice input through the microphone. The input section 7800 may, for example, be a remote control device using infrared rays or other radio waves, or an external connecting device such as a mobile telephone, a personal digital assistant (PDA), or the like that supports operation of the vehicle control system 7000. The input section 7800 may be, for example, a camera. In that case, an occupant can input information by gesture. Alternatively, data may be input which is obtained by detecting the movement of a wearable device that an occupant wears. Further, the input section 7800 may, for example, include an input control circuit or the like that generates an input signal on the basis of information input by an occupant or the like using the above-described input section 7800, and which outputs the generated input signal to the integrated control unit 7600. An occupant or the like inputs various kinds of data or gives an instruction for processing operation to the vehicle control system 7000 by operating the input section 7800.

The storage section 7690 may include a read only memory (ROM) that stores various kinds of programs executed by the microcomputer and a random access memory (RAM) that stores various kinds of parameters, operation results, sensor values, or the like. In addition, the storage section 7690 may be implemented by a magnetic storage device such as a hard disc drive (HDD) or the like, a semiconductor storage device, an optical storage device, a magneto-optical storage device, or the like.

The general-purpose communication I/F 7620 is a communication I/F used widely, which communication I/F mediates communication with various apparatuses present in an external environment 7750. The general-purpose communication I/F 7620 may implement a cellular communication protocol such as global system for mobile communications (GSM), worldwide interoperability for microwave access (WiMAX), long term evolution (LTE)), LTE-advanced (LTE-A), or the like, or another wireless communication protocol such as wireless LAN (referred to also as wireless fidelity (Wi-Fi (registered trademark)), Bluetooth (registered trademark), or the like. Further, the general-purpose communication I/F 7620 may, for example, connect to an apparatus (for example, an application server or a control server) present on an external network (for example, the Internet, a cloud network, or a company-specific network) via a base station or an access point. In addition, the general-purpose communication I/F 7620 may connect to a terminal present in the vicinity of the vehicle (which terminal is, for example, a terminal of the driver, a pedestrian, or a store, or a machine type communication (MTC) terminal) using a peer to peer (P2P) technology, for example.

The dedicated communication I/F 7630 is a communication I/F that supports a communication protocol developed for use in vehicles. The dedicated communication I/F 7630 may implement a standard protocol such, for example, as wireless access in vehicle environment (WAVE), which is a combination of institute of electrical and electronic engineers (IEEE) 802.11p as a lower layer and IEEE 1609 as a higher layer, dedicated short range communications (DSRC), or a cellular communication protocol. The dedicated communication I/F 7630 typically carries out V2X communication as a concept including one or more of communication between a vehicle and a vehicle (Vehicle to Vehicle), communication between a road and a vehicle (Vehicle to Infrastructure), communication between a vehicle and a home (Vehicle to Home), and communication between a pedestrian and a vehicle (Vehicle to Pedestrian).

The positioning section 7640, for example, performs positioning by receiving a global navigation satellite system (GNSS) signal from a GNSS satellite (for example, a GPS signal from a global positioning system (GPS) satellite), and generates positional information including the latitude, longitude, and altitude of the vehicle. Incidentally, the positioning section 7640 may identify a current position by exchanging signals with a wireless access point, or may obtain the positional information from a terminal such as a mobile telephone, a PHS, or a smart phone that has a positioning function.

The beacon receiving section 7650, for example, receives a radio wave or an electromagnetic wave transmitted from a radio station installed on a road or the like, and thereby obtains information about the current position, congestion, a closed road, a necessary time, or the like. Incidentally, the function of the beacon receiving section 7650 may be included in the dedicated communication I/F 7630 described above.

The in-vehicle device I/F 7660 is a communication interface that mediates connection between the microcomputer 7610 and various in-vehicle devices 7760 present within the vehicle. The in-vehicle device I/F 7660 may establish wireless connection using a wireless communication protocol such as wireless LAN, Bluetooth (registered trademark), near field communication (NFC), or wireless universal serial bus (WUSB) . In addition, the in-vehicle device I/F 7660 may establish wired connection by universal serial bus (USB), high-definition multimedia interface (HDMI), mobile high-definition link (MHL), or the like via a connection terminal (and a cable if necessary) not depicted in the figures. The in-vehicle devices 7760 may, for example, include at least one of a mobile device, a wearable device possessed by an occupant, or an information device carried into or attached to the vehicle. The in-vehicle devices 7760 may also include a navigation device that searches for a path to an arbitrary destination. Further, the in-vehicle device I/F 7660 exchanges control signals or data signals with these in-vehicle devices 7760.

The vehicle-mounted network I/F 7680 is an interface that mediates communication between the microcomputer 7610 and the communication network 7010. The vehicle-mounted network I/F 7680 transmits and receives signals or the like in conformity with a predetermined protocol supported by the communication network 7010.

The microcomputer 7610 of the integrated control unit 7600 controls the vehicle control system 7000 in accordance with various kinds of programs on the basis of information obtained via at least one of the general-purpose communication I/F 7620, the dedicated communication I/F 7630, the positioning section 7640, the beacon receiving section 7650, the in-vehicle device I/F 7660, or the vehicle-mounted network I/F 7680. For example, the microcomputer 7610 may calculate a control target value for the driving force generating device, the steering mechanism, or the braking device on the basis of the obtained information about the inside and outside of the vehicle, and output a control command to the driving system control unit 7100. For example, the microcomputer 7610 may perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like. In addition, the microcomputer 7610 may perform cooperative control intended for automatic driving, which makes the vehicle to travel autonomously without depending on the operation of the driver, or the like, by controlling the driving force generating device, the steering mechanism, the braking device, or the like on the basis of the obtained information about the surroundings of the vehicle.

The microcomputer 7610 may generate three-dimensional distance information between the vehicle and an object such as a surrounding structure, a person, or the like, and generate local map information including information about the surroundings of the current position of the vehicle, on the basis of information obtained via at least one of the general-purpose communication I/F 7620, the dedicated communication I/F 7630, the positioning section 7640, the beacon receiving section 7650, the in-vehicle device I/F 7660, or the vehicle-mounted network I/F 7680. In addition, the microcomputer 7610 may predict danger such as collision of the vehicle, approaching of a pedestrian or the like, an entry to a closed road, or the like on the basis of the obtained information, and generate a warning signal. The warning signal may, for example, be a signal for producing a warning sound or lighting a warning lamp.

The sound/image output section 7670 transmits an output signal of at least one of a sound or an image to an output device capable of visually or auditorily notifying information to an occupant of the vehicle or the outside of the vehicle. In the example of Fig. 34, an audio speaker 7710, a display section 7720, and an instrument panel 7730 are illustrated as the output device. The display section 7720 may, for example, include at least one of an on-board display or a head-up display. The display section 7720 may have an augmented reality (AR) display function. The output device may be other than these devices, and may be another device such as headphones, a wearable device such as an eyeglass type display worn by an occupant or the like, a projector, a lamp, or the like. In a case where the output device is a display device, the display device visually displays results obtained by various kinds of processing performed by the microcomputer 7610 or information received from another control unit in various forms such as text, an image, a table, a graph, or the like. In addition, in a case where the output device is an audio output device, the audio output device converts an audio signal constituted of reproduced audio data or sound data or the like into an analog signal, and auditorily outputs the analog signal.

Incidentally, at least two control units connected to each other via the communication network 7010 in the example depicted in Fig. 34 may be integrated into one control unit. Alternatively, each individual control unit may include a plurality of control units. Further, the vehicle control system 7000 may include another control unit not depicted in the figures. In addition, part or the whole of the functions performed by one of the control units in the above description may be assigned to another control unit. That is, predetermined arithmetic processing may be performed by any of the control units as long as information is transmitted and received via the communication network 7010. Similarly, a sensor or a device connected to one of the control units may be connected to another control unit, and a plurality of control units may mutually transmit and receive detection information via the communication network 7010.

Note that a computer program for realizing each function of the camera unit 10 according to the present embodiment described using Fig. 13 can be implemented on any control unit, or the like. Further, it is also possible to provide a computer readable recording medium in which such a computer program is stored. The recording medium is, for example, a magnetic disk, an optical disk, a magnetooptical disk, a flash memory, or the like. Further, the above-described computer program may be delivered, for example, via a network without using a recording medium.

In the vehicle control system 7000 described above, the camera unit 10 according to the present embodiment described with reference to Fig. 13 can be applied to the integrated control unit 7600 of the application example illustrated in Fig. 34. For example, the signal processing unit 104 and the timing control unit 106 of the camera unit 10 correspond to the microcomputer 7610 of the integrated control unit 7600. For example, in order to suppress the histogram spike, by setting the different clip values between the long accumulation and the short accumulation, the integrated control unit 7600 can recognize a traffic signal, a road sign, and the like of an LED with a high blinking response speed reliably in a situation in which a luminance difference is very large such as an exit of a tunnel and recognize an obstacle such as a preceding vehicle or a pedestrian accurately.

Further, at least some components of the camera unit 10 described above with reference to Fig. 13 may be realized in a module (for example, an integrated circuit module configured by one die) for the integrated control unit 7600 illustrated in Fig. 34. Alternatively, the camera unit 10 described above with reference to Fig. 13 may be realized by a plurality of control units of the vehicle control system 7000 illustrated in Fig. 34.

Further, the present technology can have the following configurations.

(1) A signal processing device, including:

an adding unit that adds signals of a plurality of images captured at different exposure times using different saturation signal amounts; and
a synthesizing unit that synthesizes signals of a plurality of images obtained as a result of the addition.

(2) The signal processing device according to (1) described above, further including
a linearizing unit that linearizes the signals of the images obtained as a result of the addition,
in which the synthesizing unit synthesizes signals of a plurality of images obtained as the linearization in a region which is a signal amount of the signals of the images obtained as a result of the addition and different from surrounding regions in a signal amount when a slope of the signal amount to a light quantity changes.

(3) The signal processing device according to (2) described above,
in which the signal amount when the slope changes changes in accordance with the saturation signal amount.

(4) The signal processing device according to any of (2) to (3) described above,
in which a saturation signal amount for a signal of at least one image is set to differ for signals of a plurality of images to be added.

(5) The signal processing device according to (4) described above,
in which a signal of an image having a longer exposure time among the signals of the plurality of images is set so that the saturation signal amount is different.

(6) The signal processing device according to any of (2) to (5) described above, further including
a synthesis coefficient calculating unit that calculates a synthesis coefficient indicating a synthesis rate of signals of a plurality of images obtained as a result of the linearization on the basis of a signal of a reference image among the signals of the plurality of images,
in which the synthesizing unit synthesizes the signals of the plurality of images on a basis of the synthesis coefficient.

(7) The signal processing device according to (6) described above,
in which, when a signal of a first image obtained as a result of addition and linearization using a first saturation signal amount and a signal of a second image obtained as a result of addition and linearization using a second saturation signal amount lower than the first saturation signal amount are synthesized, the synthesis coefficient calculation unit calculates the synthesis coefficient for synthesizing the signal of the first image and the signal of the second image in accordance with a level of a signal of a setting image in which the first saturation signal amount is set.

(8) The signal processing device according to (7) described above,
in which the synthesis coefficient calculating unit calculates the synthesis coefficient so that a synthesis rate of the signal of the second image in a signal of a synthesis image obtained by synthesizing the signal of the first image and the signal of the second image is 100% until the level of the signal of the setting image becomes the first saturation signal amount.

(9) The signal processing device according to (8) described above,
in which, when the level of the signal of the setting image becomes the first saturation signal amount, the slope of the signal of image obtained as a result of the addition changes.

(10) The signal processing device according to (6) described above, further including
a synthesis coefficient modulating unit that modulates the synthesis coefficient on the basis of a motion detection result between the signals of the plurality of images,
in which the synthesizing unit synthesizes the signals of the plurality of images on the basis of a post motion compensation synthesis coefficient obtained as a result of the modulation.

(11) The signal processing device according to (10) described above,
in which, when a motion is detected between the signals of the plurality of images, the synthesis coefficient modulating unit modulates the synthesis coefficient so that a synthesis rate of a signal of an image having more reliable information among the signals of the plurality of images is increased.

(12) The signal processing device according to (11) described above,
in which, in a case where a motion is detected between a signal of a first image obtained as a result of addition and linearization using a first saturation signal amount and a signal of a second image obtained as a result of addition and linearization using a second saturation signal amount lower than the first saturation signal amount, the synthesis coefficient modulating unit modulates the synthesis coefficient for synthesizing the signal of the first image and the signal of the second image so that a synthesis rate of the signal of the first image in a signal of a synthesis image obtained by synthesizing the signal of the first image and the signal of the second image is increased.

(13) The signal processing device according to any of (1) to (12) described above, further including

a control unit that controls exposure times of the plurality of images, in which the plurality of images include a first exposure image having a first exposure time and a second exposure image having a second exposure time different from the first exposure time, and

the control unit performs control such that the second exposure image is captured subsequently to the first exposure image, and minimizes an interval between an exposure end of the first exposure image and an exposure start of the second exposure image.

(14) An imaging device, including:

an image generating unit that generates a plurality of images captured at different exposure times;
an adding unit that adds signals of the plurality of images using different saturation signal amounts; and
a synthesizing unit that synthesizes signals of a plurality of images obtained as a result of the addition.

(15) A signal processing method, including the steps of:

adding signals of a plurality of images captured at different exposure times using different saturation signal amounts; and
synthesizing signals of a plurality of images obtained as a result of the addition.

REFERENCE SIGNS LIST

| | |
|---|---|
| 10 | Camera unit |
| 101 | Lens |
| 102 | Imaging element |
| 103 | Delay line |
| 104 | Signal processing unit |
| 105 | Output unit |
| 106 | Timing control unit |
| 121 | First addition processing unit |
| 122 | First linearization processing unit |
| 123 | Second addition processing unit |
| 124 | Second linearization processing unit |
| 125 | Synthesis coefficient calculating unit |
| 126 | Motion detecting unit |
| 127 | Synthesis coefficient modulating unit |
| 128 | Synthesis processing unit |
| 141 | First addition processing unit |
| 142 | First linearization processing unit |
| 143 | Second addition processing unit |
| 144 | Second linearization processing unit |
| 145 | Third addition processing unit |
| 146 | Third linearization processing unit |
| 147 | First synthesis coefficient calculating unit |
| 148 | First motion detecting unit |
| 149 | First synthesis coefficient modulating unit |
| 150 | First synthesis processing unit |
| 151 | Second synthesis coefficient calculating unit |
| 152 | Second motion detecting unit |
| 153 | Second synthesis coefficient modulating unit |
| 154 | Second synthesis processing unit |
| 201 | Pixel region |
| 202 | Signal processing circuit region |
| 203 | Memory region |
| 211 | Camera signal processing unit |

311     Camera signal processing unit
1000    Computer
1001    CPU
7000    Vehicle control system
7600    Integrated control unit
7610    Microcomputer

**Claims**

1.  A signal processing device, comprising:

    an adding unit that adds signals of a plurality of images captured at different exposure times using different saturation signal amounts; and
    a synthesizing unit that synthesizes signals of a plurality of images obtained as a result of the addition.

2.  The signal processing device according to claim 1, further comprising
    a linearizing unit that linearizes the signals of the images obtained as a result of the addition,
    wherein the synthesizing unit synthesizes signals of a plurality of images obtained as the linearization in a region which is a signal amount of the signals of the images obtained as a result of the addition and different from surrounding regions in a signal amount when a slope of the signal amount to a light quantity changes.

3.  The signal processing device according to claim 2,
    wherein the signal amount when the slope changes changes in accordance with the saturation signal amount.

4.  The signal processing device according to claim 2,
    wherein a saturation signal amount for a signal of at least one image is set to differ for signals of a plurality of images to be added.

5.  The signal processing device according to claim 4,
    wherein a signal of an image having a longer exposure time among the signals of the plurality of images is set so that the saturation signal amount is different.

6.  The signal processing device according to claim 2, further comprising
    a synthesis coefficient calculating unit that calculates a synthesis coefficient indicating a synthesis rate of signals of a plurality of images obtained as a result of the linearization on the basis of a signal of a reference image among the signals of the plurality of images,
    wherein the synthesizing unit synthesizes the signals of the plurality of images on a basis of the synthesis coefficient.

7.  The signal processing device according to claim 6,
    wherein, when a signal of a first image obtained as a result of addition and linearization using a first saturation signal amount and a signal of a second image obtained as a result of addition and linearization using a second saturation signal amount lower than the first saturation signal amount are synthesized, the synthesis coefficient calculation unit calculates the synthesis coefficient for synthesizing the signal of the first image and the signal of the second image in accordance with a level of a signal of a setting image in which the first saturation signal amount is set.

8.  The signal processing device according to claim 7,
    wherein the synthesis coefficient calculating unit calculates the synthesis coefficient so that a synthesis rate of the signal of the second image in a signal of a synthesis image obtained by synthesizing the signal of the first image and the signal of the second image is 100% until the level of the signal of the setting image becomes the first saturation signal amount.

9.  The signal processing device according to claim 8,
    wherein, when the level of the signal of the setting image becomes the first saturation signal amount, the slope of the signal of image obtained as a result of the addition changes.

10. The signal processing device according to claim 6, further comprising
    a synthesis coefficient modulating unit that modulates the synthesis coefficient on the basis of a motion detection result between the signals of the plurality of images,
wherein the synthesizing unit synthesizes the signals of the plurality of images on the basis of a post motion compensation synthesis coefficient obtained as a result of the modulation.

11. The signal processing device according to claim 10,
wherein, when a motion is detected between the signals of the plurality of images, the synthesis coefficient modulating unit modulates the synthesis coefficient so that a synthesis rate of a signal of an image having more reliable information among the signals of the plurality of images is increased.

12. The signal processing device according to claim 11,
wherein, in a case where a motion is detected between a signal of a first image obtained as a result of addition and linearization using a first saturation signal amount and a signal of a second image obtained as a result of addition and linearization using a second saturation signal amount lower than the first saturation signal amount, the synthesis coefficient modulating unit modulates the synthesis coefficient for synthesizing the signal of the first image and the signal of the second image so that a synthesis rate of the signal of the first image in a signal of a synthesis image obtained by synthesizing the signal of the first image and the signal of the second image is increased.

13. The signal processing device according to claim 1, further comprising a control unit that controls exposure times of the plurality of images, wherein the plurality of images include a first exposure image having a first exposure time and a second exposure image having a second exposure time different from the first exposure time, and
the control unit performs control such that the second exposure image is captured subsequently to the first exposure image, and minimizes an interval between an exposure end of the first exposure image and an exposure start of the second exposure image.

14. An imaging device, comprising:

an image generating unit that generates a plurality of images captured at different exposure times;
an adding unit that adds signals of the plurality of images using different saturation signal amounts; and
a synthesizing unit that synthesizes signals of a plurality of images obtained as a result of the addition.

15. A signal processing method, comprising the steps of:

adding signals of a plurality of images captured at different exposure times using different saturation signal amounts; and
synthesizing signals of a plurality of images obtained as a result of the addition.

## FIG. 1

PHOTOGRAPHING EXAMPLE OF EXIT OF TUNNEL

DRIVING CONTROL FOR SECURING SAFETY IS UNABLE TO BE PERFORMED IF SITUATION OF EXIT OF TUNNEL IS UNABLE TO BE RECOGNIZED

# FIG. 2

PHOTOGRAPHING EXAMPLE OF
LED TRAFFIC SIGNAL

Frame1     Frame2     Frame3     Frame4

TURNED OFF

⇧TOK
⇧NER

TIME

IF COLOR OF TRAFFIC SIGNAL IS UNABLE TO BE DETERMINED...
IN CASE OF DRIVE RECORDER: THERE IS NO ADMISSIBILITY OF EVIDENCE AS VIDEO WHEN ACCIDENT OCCURS
IN CASE OF SELF-DRIVING CAR: AUTOMOBILE IS UNABLE TO DETERMINE WHETHER TO MOVE OR STOP

# FIG. 3

**EXAMPLE OF RECOGNIZING FRONT VIEW OF VEHICLE**

Closest In-Path Vehicle

Distance from all vehicles in range

Road radius of curvature

6.5m

3.4m

Distance to left lane — 0.51

Distance to right lane — 0.65

# FIG. 4

# FIG. 5

EP 3 518 524 A1

## FIG. 6

LED LIGHT EMISSION AMOUNT

10ms (FREQUENCY 100Hz)

ON PERIOD 6ms

OFF PERIOD 4ms

COMMERCIAL POWER AMPLITUDE (AFTER FULL-WAVE RECTIFICATION)

EXPOSURE TIME

TIME

4ms < EXPOSURE TIME

EP 3 518 524 A1

## FIG. 7

LIGHT QUANTITY

LIGHT QUANTITY IN WHICH PIXEL IS SATURATED AT TIME OF T1 EXPOSURE

LIGHT QUANTITY IN WHICH PIXEL IS SATURATED AT TIME OF T2 EXPOSURE

P2, MAX

LONG ACCUMULATION CHARGE AMOUNT (P1)

KNEE POINT (Kp1)

P1, MAX

SHORT ACCUMULATION CHARGE AMOUNT (P2)

TIME

LONG ACCUMULATION EXPOSURE TIME (T1)

SHORT ACCUMULATION EXPOSURE TIME (T2)

EP 3 518 524 A1

# FIG. 8

PIXEL VALUE

— : LONG ACCUMULATION (P1)

—·— : SHORT ACCUMULATION (P2)

--- : ADDITION SIGNAL
(Plo=P1+P2)

······· : LINEARLY RESTORED SIGNAL (P)

KNEE POINT (Kp1)

SATURATION
SIGNAL AMOUNT
(FULLSCALE)

BRIGHTNESS

A

FIRST REGION ⟷ SECOND REGION

EP 3 518 524 A1

## FIG. 9

A1

HISTOGRAM

HISTOGRAM OF ROAD SURFACE IS FLAT

LEVEL

A CASE WHERE THERE IS NO OBSTACLE IN TRAVELING DIRECTION

A1

HISTOGRAM

SINCE PEAK OCCURS IN HISTOGRAM OF ROAD SURFACE, IT IS UNDERSTOOD THAT THERE IS CERTAIN OBSTACLE IN REGION OF LEVEL CORRESPONDING TO POSITION OF PEAK

LEVEL

B CASE WHERE THERE IS OBSTACLE IN TRAVELING DIRECTION

*FIG. 10*

EP 3 518 524 A1

# FIG. 11

A LONG ACCUMULATION

0          4095             4095

B SHORT ACCUMULATION (EXPOSURE RATIO 16 TIMES)

0          256             1000

C SYNTHESIS RESULT USING CURRENT TECHNOLOGY

0          4095             16000

A2

## FIG. 12

LAMP IMAGE WITH NO OBSTACLE

LAMP IMAGE WITH OBSTACLE

A3 THERE IS NO OBSTACLE
(SYNTHESIS BY CURRENT TECHNOLOGY)

PSEUDO PEAK

A4 THERE IS OBSTACLE
(SYNTHESIS BY CURRENT TECHNOLOGY)

PEAK INDICATING PRESENCE OF OBSTACLE

PSEUDO PEAK

A3

IN CURRENT TECHNOLOGY, PSEUDO PEAK OCCURS IN HISTOGRAM, IT IS NOT DISTINGUISHED FROM MAIN PEAK FOR DETECTING PRESENCE OR ABSENCE OF OBSTACLE, AND OBSTACLE IS LIKELY TO BE ERRONEOUSLY DETECTED

EP 3 518 524 A1

## FIG. 13

Block diagram:

LENS (101) → IMAGING ELEMENT (102) → DELAY LINE (103) → (IMAGE 1, IMAGE 2, ..., IMAGE N) → SIGNAL PROCESSING UNIT (104) → OUTPUT UNIT (105) → VIDEO DATA

TIMING CONTROL UNIT (106) connected between SIGNAL PROCESSING UNIT and IMAGING ELEMENT.

CAMERA UNIT (10)

EP 3 518 524 A1

# FIG. 14

LED LIGHT EMISSION AMOUNT

BLINKING PERIOD: Tb[sec]

ON PERIOD

OFF PERIOD

COMMERCIAL POWER AMPLITUDE (AFTER FULL-WAVE RECTIFICATION)

T1    T2    T3

TIME

EP 3 518 524 A1

## FIG. 15

A

LED LIGHT EMISSION AMOUNT

BLINKING PERIOD: Tb [sec]

ON PERIOD   OFF PERIOD   ON PERIOD

T1   T2   T3   TIME

B

LED LIGHT EMISSION AMOUNT

BLINKING PERIOD: Tb [sec]

ON PERIOD   OFF PERIOD   ON PERIOD

T1   T2   T3   TIME

EP 3 518 524 A1

# FIG. 16

EP 3 518 524 A1

# FIG. 17

START SIGNAL PROCESSING IN CASE
WHERE DUAL SYNTHESIS IS PERFORMED

PERFORM UPPER LIMIT CLIP PROCESS ON VALUES OF IMAGE SIGNAL T1 AND IMAGE SIGNAL T2 USING PREDETERMINED VALUES — S11

ADD IMAGE SIGNAL T1 AND IMAGE SIGNAL T2 AFTER UPPER LIMIT CLIP PROCESS AND GENERATE ADDITION SIGNAL SUM1 — S12

PERFORM UPPER LIMIT CLIP PROCESS ON VALUES OF IMAGE SIGNAL T1 AND IMAGE SIGNAL T2 USING VALUES DIFFERENT FROM THOSE IN FIRST ADDITION PROCESS — S13

ADD IMAGE SIGNAL T1 AND IMAGE SIGNAL T2 AFTER UPPER LIMIT CLIP PROCESS AND GENERATE ADDITION SIGNAL SUM2 — S14

LINEARIZE ADDITION SIGNAL SUM1 AND GENERATE LINEAR SIGNAL LIN1 — S15

LINEARIZE ADDITION SIGNAL SUM2 AND GENERATE LINEAR SIGNAL LIN2 — S16

CALCULATE SYNTHESIS COEFFICIENT WITH REFERENCE TO IMAGE SIGNAL T1 — S17

DETECT MOTION USING LINEAR SIGNAL LIN1 AND LINEAR SIGNAL LIN2 AND CALCULATE MOTION COEFFICIENT — S18

SUBTRACT MOTION COEFFICIENT FROM SYNTHESIS COEFFICIENT AND CALCULATE POST MOTION COMPENSATION SYNTHESIS COEFFICIENT — S19

SYNTHESIZE LINEAR SIGNAL LIN1 AND LINEAR SIGNAL LIN2 WITH REFERENCE TO POST MOTION COMPENSATION SYNTHESIS COEFFICIENT AND GENERATE SYNTHESIZED IMAGE SIGNAL — S20

OUTPUT SYNTHESIZED IMAGE SIGNAL — S21

END

# FIG. 18

KNEE POINT
A5  CURRENT TECHNOLOGY

A

KNEE POINT  PRESENT TECHNOLOGY

B

EP 3 518 524 A1

FIG. 19

FIG. 20

A6

EP 3 518 524 A1

## FIG. 21

EP 3 518 524 A1

# FIG. 22

```
┌─────────────────────────────────────────────────────────┐
│        START SIGNAL PROCESSING IN CASE                  │
│      WHERE TRIPLE SYNTHESIS IS PERFORMED                │
└─────────────────────────────────────────────────────────┘
                          │
                          ▼
┌─────────────────────────────────────────────────────────┐ S51
│ PERFORM UPPER LIMIT CLIP PROCESS ON VALUES OF IMAGE SIGNAL T1, │
│ IMAGE SIGNAL T2, AND IMAGE SIGNAL 3 USING PREDETERMINED VALUES │
└─────────────────────────────────────────────────────────┘
                          │
                          ▼
┌─────────────────────────────────────────────────────────┐ S52
│ ADD IMAGE SIGNAL T1, IMAGE SIGNAL T2, AND IMAGE SIGNAL T3 │
│ AFTER UPPER LIMIT CLIP PROCESS AND GENERATE ADDITION SIGNAL SUM1 │
└─────────────────────────────────────────────────────────┘
                          │
                          ▼
┌─────────────────────────────────────────────────────────┐ S53
│ PERFORM UPPER LIMIT CLIP PROCESS ON AT LEAST VALUE OF IMAGE SIGNAL T1 │
│ USING VALUES DIFFERENT FROM THOSE IN FIRST ADDITION PROCESS │
└─────────────────────────────────────────────────────────┘
                          │
                          ▼
┌─────────────────────────────────────────────────────────┐ S54
│ ADD IMAGE SIGNAL T1, IMAGE SIGNAL T2, AND IMAGE SIGNAL T3 │
│ AFTER UPPER LIMIT CLIP PROCESS AND GENERATE ADDITION SIGNAL SUM2 │
└─────────────────────────────────────────────────────────┘
                          │
                          ▼
┌─────────────────────────────────────────────────────────┐ S55
│ PERFORM UPPER LIMIT CLIP PROCESS ON AT LEAST VALUE OF IMAGE SIGNAL T2 │
│ USING VALUES DIFFERENT FROM THOSE IN SECOND ADDITION PROCESS │
└─────────────────────────────────────────────────────────┘
                          │
                          ▼
┌─────────────────────────────────────────────────────────┐ S56
│ ADD IMAGE SIGNAL T1, IMAGE SIGNAL T2, AND IMAGE SIGNAL T3 │
│ AFTER UPPER LIMIT CLIP PROCESS AND GENERATE ADDITION SIGNAL SUM3 │
└─────────────────────────────────────────────────────────┘
                          │
                          ▼
┌─────────────────────────────────────────────────────────┐ S57
│ LINEARIZE ADDITION SIGNAL SUM1 AND GENERATE LINEAR SIGNAL LIN1 │
└─────────────────────────────────────────────────────────┘
                          │
                          ▼
┌─────────────────────────────────────────────────────────┐ S58
│ LINEARIZE ADDITION SIGNAL SUM2 AND GENERATE LINEAR SIGNAL LIN2 │
└─────────────────────────────────────────────────────────┘
                          │
                          ▼
┌─────────────────────────────────────────────────────────┐ S59
│ LINEARIZE ADDITION SIGNAL SUM3 AND GENERATE LINEAR SIGNAL LIN3 │
└─────────────────────────────────────────────────────────┘
                          │
                          ▼
                        ( 1 )
```

# FIG. 23

(1)

| S60 | CALCULATE FIRST SYNTHESIS COEFFICIENT WITH REFERENCE TO IMAGE SIGNAL T1 |

S60 CALCULATE FIRST SYNTHESIS COEFFICIENT WITH REFERENCE TO IMAGE SIGNAL T1

S61 DETECT MOTION IN LINEAR SIGNAL LIN1 AND LINEAR SIGNAL LIN2 AND CALCULATE FIRST MOTION COEFFICIENT

S62 SUBTRACT FIRST MOTION COEFFICIENT FROM FIRST SYNTHESIS COEFFICIENT AND CALCULATE FIRST POST MOTION COMPENSATION SYNTHESIS COEFFICIENT

S63 SYNTHESIZE LINEAR SIGNAL LIN1 AND LINEAR SIGNAL LIN2 WITH REFERENCE TO FIRST POST MOTION COMPENSATION SYNTHESIS COEFFICIENT AND GENERATE SYNTHESIS SIGNAL BLD1

S64 CALCULATE SECOND SYNTHESIS COEFFICIENT WITH REFERENCE TO IMAGE SIGNAL T2

S65 DETECT MOTION IN LINEAR SIGNAL LIN2 AND LINEAR SIGNAL LIN3 AND CALCULATE SECOND MOTION COEFFICIENT

S66 SUBTRACT SECOND MOTION COEFFICIENT FROM SECOND SYNTHESIS COEFFICIENT AND CALCULATE SECOND POST MOTION COMPENSATION SYNTHESIS COEFFICIENT

S67 SYNTHESIZE SYNTHESIS SIGNAL BLD1 AND LINEAR SIGNAL LIN3 WITH REFERENCE TO SECOND POST MOTION COMPENSATION SYNTHESIS COEFFICIENT AND GENERATE SYNTHESIZED IMAGE SIGNAL

S68 OUTPUT SYNTHESIZED IMAGE SIGNAL

END

*FIG. 24*

LIN1

Legend:
- ---- : LIN1 (LINEARLY RESTORED SIGNAL)
- ──── : SUM1 (LONG ACCUMULATION + INTERMEDIATE ACCUMULATION + SHORT ACCUMULATION)
- ──── : T1 (LONG ACCUMULATION)
- ─·─·─ : T2 (INTERMEDIATE ACCUMULATION)
- ─··─·· : T3 (SHORT ACCUMULATION)

PIXEL VALUE

Kp2_1
Kp1_1
CLIP_T1_1
CLIP_T2_1
CLIP_T3_1

FIRST REGION  SECOND REGION  THIRD REGION

BRIGHTNESS

# FIG. 25

EP 3 518 524 A1

## FIG. 26

# FIG. 27

PIXEL VALUE OF LONG ACCUMULATION OF LIN1

CLIP_T1_1

NOISE OF INTERMEDIATE ACCUMULATION+ SHORT ACCUMULATION NEAR CLIP_T1_1= REGION IN WHICH HISTOGRAM SPIKE OCCURS IN LIN1

BRIGHTNESS

BLENDING RATIO OF LIN2 TO LIN1 (alpha_L)

1.0

0

BRIGHTNESS

BLD_TH_L_LOW

BLD_TH_L_HIGH

PIXEL VALUE OF LONG ACCUMULATION OF LIN2

NOISE AMOUNT OF INTERMEDIATE ACCUMULATION+ SHORT ACCUMULATION NEAR BLD_TH_L_LOW

NOISE OF INTERMEDIATE ACCUMULATION+ SHORT ACCUMULATION NEAR CLIP_T1_2= REGION IN WHICH HISTOGRAM SPIKE OCCURS IN LIN2

CLIP_T1_2

BRIGHTNESS

# FIG. 28

Legend:
- - - - - : LIN (LINEARLY RESTORED SIGNAL)
——— : SUM
——— : T1 (LONG ACCUMULATION)
—·—·— : T2 (INTERMEDIATE ACCUMULATION)
—··—··— : T3 (SHORT ACCUMULATION)

PIXEL VALUE

LIN_1    LIN_2    LIN_3

KP_2

KP_1

CLIP_[T1, T2, T3]

BRIGHTNESS

FIRST REGION    SECOND REGION    THIRD REGION

EP 3 518 524 A1

## FIG. 29

201   200A

PIXEL REGION

SIGNAL
PROCESSING
CIRCUIT REGION

200B

202

## FIG. 30

201

PIXEL REGION

202

SIGNAL
PROCESSING
CIRCUIT
REGION

211

CAMERA SIGNAL
PROCESSING
UNIT

212          213          214

# FIG. 31

# FIG. 32

PIXEL REGION ~201

SIGNAL PROCESSING CIRCUIT REGION ~202

~312

CAMERA SIGNAL PROCESSING UNIT ~311

~313

314~

MEMORY REGION

203                    321                              322

## FIG. 33

EP 3 518 524 A1

*FIG. 34*

# FIG. 35

## INTERNATIONAL SEARCH REPORT

| International application No. |
|---|
| PCT/JP2017/032393 |

A.  CLASSIFICATION OF SUBJECT MATTER
*H04N5/232*(2006.01)i, *G06T1/00*(2006.01)i, *G06T5/50*(2006.01)i, *G08G1/16* (2006.01)i, *H04N5/235*(2006.01)i

According to International Patent Classification (IPC) or to both national classification and IPC

B.  FIELDS SEARCHED

Minimum documentation searched (classification system followed by classification symbols)
H04N5/232, G06T1/00, G06T5/50, G08G1/16, H04N5/235

Documentation searched other than minimum documentation to the extent that such documents are included in the fields searched
Jitsuyo Shinan Koho        1922–1996   Jitsuyo Shinan Toroku Koho   1996–2017
Kokai Jitsuyo Shinan Koho  1971–2017   Toroku Jitsuyo Shinan Koho   1994–2017

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y<br>A | JP 2009-152669 A  (Sony Corp.),<br>09 July 2009 (09.07.2009),<br>paragraph [0051]<br>& US 2009/0153699 A1<br>paragraph [0067]<br>& CN 101465966 A | 1,13-15<br>2-12 |
| Y<br>A | JP 2013-175897 A  (Toshiba Corp.),<br>05 September 2013 (05.09.2013),<br>paragraph [0026]<br>(Family: none) | 1,13-15<br>2-12 |
| Y<br>A | JP 2002-135787 A  (Hitachi, Ltd.),<br>10 May 2002 (10.05.2002),<br>paragraph [0039]<br>(Family: none) | 1,13-15<br>2-12 |

|☒| Further documents are listed in the continuation of Box C. | ☐ | See patent family annex. |

\*   Special categories of cited documents:
"A"   document defining the general state of the art which is not considered    to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search<br>    13 October 2017 (13.10.17) | Date of mailing of the international search report<br>    24 October 2017 (24.10.17) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

# EP 3 518 524 A1

**INTERNATIONAL SEARCH REPORT**

| International application No. |
| --- |
| PCT/JP2017/032393 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y<br>A | JP 2014-036401 A  (Sony Corp.),<br>24 February 2014 (24.02.2014),<br>paragraphs [0042] to [0048]<br>& US 2014/0044366 A1<br>paragraphs [0061] to [0067]<br>& CN 103581556 A | 1,13-15<br>2-12 |
| Y | JP 4-207581 A  (Canon Inc.),<br>29 July 1992 (29.07.1992),<br>page 2, lower right column, lines 4 to 13<br>(Family: none) | 13 |
| Y | JP 2003-189174 A  (Acutelogic Corp.),<br>04 July 2003 (04.07.2003),<br>paragraphs [0017], [0018]<br>(Family: none) | 13 |
| Y | JP 2008-022485 A  (Canon Inc.),<br>31 January 2008 (31.01.2008),<br>paragraphs [0023], [0024]<br>(Family: none) | 13 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5064075 A
- JP 2007161189 A
- JP 2005267030 A